(19) Europäisches Patentamt / European Patent Office / Office européen des brevets

(11) EP 3 307 515 B1

# (12) EUROPEAN PATENT SPECIFICATION

(45) Date of publication and mention of the grant of the patent:
**24.02.2021 Bulletin 2021/08**

(21) Application number: **16730943.4**

(22) Date of filing: **01.06.2016**

(51) Int Cl.:
***B29C 49/06*** *(2006.01)* ***B29C 49/08*** *(2006.01)*
***B29K 67/00*** *(2006.01)* ***B29C 49/00*** *(2006.01)*

(86) International application number:
**PCT/US2016/035246**

(87) International publication number:
**WO 2016/200653 (15.12.2016 Gazette 2016/50)**

(54) **ENHANCED BARRIER PERFORMANCE VIA BLENDS OF POLY(ETHYLENE FURANDICARBOXYLATE) AND POLY(ETHYLENE TEREPHTHALATE)**

ERHÖHTE BARRIERELEISTUNGSFÄHIGKEIT MITTELS MISCHUNGEN VON POLY(ETHYLENFURANDICARBOXYLAT) UND POLY(ETHYLENTEREPHTHALAT)

PERFORMANCE DE BARRIÈRE AMÉLIORÉE AU MOYEN DE MÉLANGES DE POLY(FURANEDICARBOXYLATE D'ÉTHYLÈNE) ET DE POLY(TÉRÉPHTALATE D'ÉTHYLÈNE)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.06.2015 US 201562174395 P**
**25.04.2016 US 201662326965 P**

(43) Date of publication of application:
**18.04.2018 Bulletin 2018/16**

(60) Divisional application:
**21151439.3**

(73) Proprietor: **DuPont Industrial Biosciences USA, LLC**
**Wilmington, Delaware 19805 (US)**

(72) Inventors:
- **DUNCAN, Andrew Jay**
  **Wilmington, Delaware 19803 (US)**
- **FAGAN, Paul**
  **Wilmington, Delaware 19803 (US)**

(74) Representative: **Mewburn Ellis LLP**
**Aurora Building**
**Counterslip**
**Bristol BS1 6BX (GB)**

(56) References cited:
**EP-A2- 2 763 908**
**WO-A1-2014/032731**
**US-A1- 2011 120 902**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 307 515 B1

## Description

### FIELD OF THE INVENTION

The present disclosure relates in general to process of making a bottle with improved shelf life using a PEF/PET blend.

### BACKGROUND OF THE INVENTION

Carbonated Soft Drink (CSD) bottle manufacturers presently are pursuing various avenues to improve barrier performance of polymeric bottles. For example, poly(ethylene terephthalate) (PET) applications use heavier bottles with thicker walls to extend shelf life, which however leads to greater resource consumption in the bottle, its manufacture, transport, and conversion within the recycle stream. Another avenue sought is to use a 100% poly(ethylene furanoate) (PEF) bottle as a 100% bio-renewable replacement for PET, which has better barrier performance than a 100% PET bottle, but is costly due to raw material availability and also due to processing/recycling, resulting from different material properties of PEF as compared to PET. Nylon/PET blends where the nylon was MXD6, have increased barrier to oxygen and carbon dioxide as compared to PET but results in opaque bottles.

In US Publication No. 20150110983, Kriegel et al. reported surprising discovery that conventional methods for processing PET cannot be successfully applied to PEF in the production of containers, such as food and beverage containers. Kreigel provided novel preforms and methods for processing PEF to produce such preforms.

In US Publication No. 20150064383, Kriegel et al. describes PEF copolymers comprising chain architecture modifying agent(s) to provide polymers with properties optimized for packaging and processing. However, this can add further complexity in synthesis and processing in the melt (control of branching) and hence can make the packaging system more costly.

In European Publication No. 2763908, Collias et al. describe a plastic package for dispensing a product in aerosol form comprising a bottle having a delivery device, a valve to control flow, and a stable plastic package that holds the product when sealed using said valve, wherein at least a portion of said stable plastic package comprises PEF. The authors also envisage blending or compounding the PEF with PET/Bio-PET.

Hence, there is a need for new compositions that are not 100% pure PEF or 100% pure PET with improved barrier performance compared to 100% pure PET, and which can be processed by conventional methods used for processing 100% pure PET.

### SUMMARY OF THE INVENTION

In a first embodiment, there is a method of making a bottle comprising the steps of:

a) making a poly(ethylene furandicarboxylate)/poly(ethylene terephthalate) (PEF/PET) blend, wherein the amount of PEF ranges from 0.1 % to 40% by weight based on the total weight of the blend;
b) injection molding the PEF/PET blend of step a) to form a blend preform under substantially similar processing conditions as used to make a standard PET preform;
c) stretch blow molding the blend preform of step b) in a standard PET mold to form a blend bottle under substantially similar processing conditions as used to make a standard PET bottle from the standard PET preform,

wherein the blend bottle made in step c) has improved shelf life as compared to the shelf life of a standard PET bottle.

In a second embodiment of the method, each section (top, panel and base) of the blend bottle has less than 25% variation in target weight compared to corresponding sections of a standard PET bottle.

In a third embodiment of the method, poly(ethylene furandicarboxylate) is an unmodified poly(ethylene furandicarboxylate) derived from ethylene glycol and furan dicarboxylate or a derivative thereof.

In a fourth embodiment, the step b) of injection molding the PEF/PET blend of step a) to form a blend preform comprises processing the PEF/PET blend through a barrel having one or more temperature zones at a temperature in the range of 260°C to 300 °C.

In a fifth embodiment, the step c) of stretch blow molding the blend preform of step b) in a standard PET mold comprises using a standard PET mold for a bottle having a volume in the range of 59 milliliter to 2 liter.

In a sixth embodiment, the blend bottle made is selected from the group consisting of a 236,588 mL (8 oz) bottle, 295,735 mL (10 oz) bottle, 354,882 mL (12 oz) bottle, 473,176 mL (16 oz) bottle, a 500 mL bottle, a 750 mL bottle, a 1 L bottle and a 2 L bottle.

In a seventh embodiment, the steps b) and c) are performed in an integrated injection-stretch blow molding machine or separately in an injection molding machine and in a stretch-blow molding machine.

In an eighth embodiment, there is a method of improving shelf life of a carbonated beverage stored in a bottle comprising packaging the carbonated beverage in a bottle made from a PEF/PET blend, wherein the amount of PEF is in the range of 0.1-40% by weight, based on the total weight of the blend.

## DETAILED DESCRIPTION OF THE INVENTION

The terms "comprises," "comprising," "includes," "including," "has," "having" or any other variation thereof, as used herein are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present). The phrase "one or more" is intended to cover a non-exclusive inclusion. For example, one or more of A, B, and C implies any one of the following: A alone, B alone, C alone, a combination of A and B, a combination of B and C, a combination of A and C, or a combination of A, B, and C.

Also, use of "a" or "an" are employed to describe elements and described herein. This is done merely for convenience and to give a general sense of the scope of the invention. This description should be read to include one or at least one and the singular also includes the plural unless it is obvious that it is meant otherwise.

The term "standard PET bottle" as used herein refers to any size carbonated soft drink (CSD) bottle which is made from poly(ethylene terephthalate) (PET) grade for packaging. The PET grade for packaging is typically modified with a small amount of comonomer, usually chosen from but not limited to 1,4-cyclohexanedimethanol (CHDM) or isophthalic acid (IPA) and may or may not include other additives.

The term "standard PET preform" as used herein refers to any preform designed specifically to form a "standard PET bottle".

The term "standard PET mold" as used herein refers to any mold designed to be used with "standard PET preform" to make a "standard PET bottle".

The term "unmodified PEF" as used herein refers to poly(ethylene furandicarboxylate) derived from ethylene glycol and furan dicarboxylate or a derivative thereof with no additional comonomers.

The term "barrier" as used herein is used interchangeably with "permeation rate" or "permeability rate" or "transmission rate" to describe the carbon dioxide gas barrier properties, with low permeation rate or low transmission rate in a material implying that the material has a high barrier.

The term "shelf life" as used herein is determined by the volume percent of carbon dioxide ($CO_2$) remaining in a carbonated soft drink (CSD) bottle with respect to the initial volume of $CO_2$ placed into the package at the time of fill for testing and/or consumption. In general, CSD bottles are filled with approximately four (e.g. 3.6 to 4.2) volumes of $CO_2$ per volume of water and it is generally accepted that a packaged carbonated soft drink reaches the end of its shelf life when 17.5 percent of the initial carbon dioxide in the bottle is lost due to permeation of the carbon dioxide through the bottle side wall and closure, sorption of the carbon dioxide into the bottle side wall and closure, loss into the increased head space due to bottle expansion or creep under pressure, and loss into the increased head space due to water loss from the package over its shelf life. In cases, where the initial $CO_2$ fill is approximately 4.0 to 4.2 volumes of carbon dioxide per volume of water, the "shelf life" is often defined as 21.4% loss of the total initial carbonation charge and is measured in weeks. The carbonation loss is measured over seven weeks at 22 °C, 0% internal Relative Humidity (RH) and 50% outside environment RH, according to the FTIR method outlined in US5473161.

The improvement in shelf life as used herein is calculated as the ratio of the difference in shelf life between a bottle made of a PEF/PET blend composition and a standard PET bottle (PET), wherein both the PEF/PET blend bottle and the standard PET bottle are made using the same preform and mold designs and substantially similar processing conditions, especially the barrel temperature:

$$\%\ \text{Improvement} = \frac{S_{PEF/PET} - S_{PET}}{S_{PET}} \times 100$$

where $S_{PEF/PET}$ is the measured or extrapolated carbonated shelf life value for the PEF/PET blend bottle and $S_{PET}$ is the measured or extrapolated carbonated shelf life value for the standard PET bottle, wherein both the PEF/PET blend bottle and the standard PET bottle are made using the same preform and mold design and have the same volumetric capacity.

The barrier improvement factor (BIF) as used herein is calculated as the ratio of the measured or extrapolated carbonated shelf life value for the PEF/PET blend bottle ($S_{PEF/PET}$) to the measured or extrapolated carbonated shelf life value for the standard PET bottle ($S_{PET}$):

$$BIF = \frac{S_{PEF/PET}}{S_{PET}}$$

The term "biologically-derived" as used herein is used interchangeably with "biobased" or "bio-derived" and refers to chemical compounds including monomers and polymers, that are obtained, in whole or in any part, from any renewable resources including but not limited to plant, animal, marine materials or forestry materials. The "biobased content" of any such compound shall be understood as the percentage of a compound's carbon content determined to have been obtained or derived from such renewable resources.

The term "furandicarboxylic acid" as used herein is used interchangeably with furandicarboxylic acid; 2,5-furandicarboxylic acid; 2,4-furandicarboxylic acid; 3,4-furandicarboxylic acid; and 2,3-furandicarboxylic acid. As used herein, the 2,5-furandicarboxylic acid (FDCA), is also known as dehydromucic acid, and is an oxidized furan derivative, as shown below:

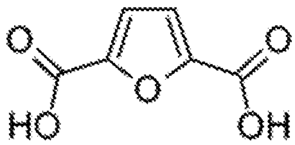

The term "furan 2,5-dicarboxylic acid (FDCA) or a functional equivalent thereof" as used herein refers to any suitable isomer of furandicarboxylic acid or derivative thereof such as, 2,5-furandicarboxylic acid; 2,4-furandicarboxylic acid; 3,4-furandicarboxylic acid; 2,3-furandicarboxylic acid or their derivatives.

The terms "PEF" and "poly(ethylene furandicarboxylate)" as used herein are used interchangeably to refer to poly(ethylene furanoate), poly(ethylene-2,5 furandicarboxylate), poly(ethylene-2,4 furandicarboxylate), poly(ethylene-2,3 furandicarboxylate), and poly(ethylene-3,4 furandicarboxylate).

The phrase "identically shaped bottle" means that a mold having the same dimensions is used to make two different bottles. The two bottles will have the same exterior dimensions, for example, bottle height, width and circumference. The weights of the identically shaped bottles may be different.

The term "preform" means an article having a fully formed bottle neck and a fully formed threaded portion, and a relatively thick tube of polymer that is closed at the end of the thick tube. The neck and threaded portion are sometimes called the "finish". The thick tube of polymer can be uniform in shape and cross section when viewing the tube from top (neck area) to bottom (closed portion) or can have a variable cross section top to bottom.

The phrase "areal stretch ratio" means the product of the axial stretch ratio times the hoop stretch ratio of a bottle blown from the preform. The phrase "axial stretch ratio" means the (bottle working height)/(preform working length). The phrase "hoop stretch ratio" means the (maximum bottle external diameter)/(preform internal diameter). The bottle working height is defined as the overall bottle height minus the finish height. The preform working length is defined as the overall preform length minus the finish length. The preform inner diameter means the diameter of the cavity of the preform.

The phrase "degree of transesterification" means the amount of transesterification between two polyesters in a polyester blend. The degree of transesterification can be measured by Interaction Polymer Chromatography (IPC).

Disclosed herein is a process of making a bottle with improved shelf life comprising the steps of making a poly(ethylene furandicarboxylate)/ poly(ethylene terephthalate) (PEF/PET) blend, injection molding the PEF/PET blend to form a blend preform, and stretch blow molding the blend preform in a standard PET mold or injection stretch blow molding to form a blend bottle, wherein the blend preform and the blend bottle are made under substantially similar processing conditions as used to make a standard PET preform and a standard PET bottle respectively.

Any suitable method can be used to make the poly(ethylene furandicarboxylate)/poly(ethylene terephthalate) (PEF/PET) blend. The PEF/PET blend may be formed first mixing each of the polyester resins, PEF and PET in solid form, such as in flakes, pellets, or powder form to form a mixture. The PEF/PET blend may also be formed within the feed to the extruder and/or injection molder via use of continuous feeders that rely on gravimetric, screw fed, or other known technologies to control the amount of each component entering the feed throat. The homogeneous mixture of PEF and PET is then subjected to a melt blending temperature, thereby converting the mixture into one melt blend composition.

The PEF/PET blend may also be formed by first subjecting each of the polyester resins, PEF and PET to a temperature above its melting point, thereby converting the polyesters into a PEF melt and a PET melt and then melt blending the PEF melt and the PET melt to form the PEF/PET blend. The melt blending temperature is in the range of extrusion processing temperatures of the PEF and PET, such as in the range of 230°C to 325°C. In other embodiments, the temperature can be in the range of from 240°C to 320°C or from 250°C to 310°C or from 260°C to 300°C.

The amount of PEF in the PEF/PET blend can be in the range of 0.1 -40%, or 1-40%, or 10-40% by weight based on the total weight of the blend. Though blends of PEF and PET with higher than 40% by weight of PEF can be formed, however, the blend may not have suitable characteristics with relation to the natural stretch ratio and strain hardening behavior to be able to mold bottles using the standard PET preform, mold, and injection molding conditions.

In an embodiment, the poly(ethylene furandicarboxylate) (PEF) in the PEF/PET blend is an unmodified poly(ethylene furandicarboxylate) derived from ethylene glycol and furan dicarboxylate or a derivative thereof. In another embodiment, the PEF in the PEF/PET blend may comprise unmodified PEF and PEF copolymer derived from ethylene glycol, furan dicarboxylate or a derivative thereof, and a comonomer, wherein the comonomer excludes any chain architecture modifying agents having reactive functionality of greater than two. The comonomer may comprise a diol different from ethylene glycol or a diacid or a derivative thereof, different from furandicarboxylic acid or a derivative thereof. In an embodiment, the PEF in the PEF/PET blend may be a copolymer (random or block) derived from ethylene glycol, furan dicarboxylate or a derivative thereof, and at least one of a diol, a polyol, a polyfunctional aromatic acid, or a hydroxyl acid. The molar ratio of furan dicarboxylic acid to other acids can be any range, for example the molar ratio of either component can be greater than 1:100 or alternatively in the range of 1:100 to 100 to 1 or 1:9 to 9:1 or 1:3 to 3:1 or 1:1 in which the diol and/or polyol is added at an excess of 1.2 to 3 equivalents to total acids charged.

Examples of diol and polyol monomers that can be included, in addition to ethylene glycol, in the polymerization monomer makeup from which a copolymer can be made include 1,4-benzenedimethanol, poly(ethylene glycol), poly(tetrahydrofuran), 2,5-di(hydroxymethyl)tetrahydrofuran, isosorbide, isomannide, glycerol, pentaerythritol, sorbitol, mannitol, erythritol, and threitol.

Examples of suitable polyfunctional acids include but are not limited to terephthalic acid, isophthalic acid, adipic acid, azelic acid, sebacic acid, dodecanoic acid, 1,4-cyclohexane dicarboxylic acid, maleic acid, succinic acid, and 1,3,5-benzenetricarboxylic acid.

Examples of suitable hydroxy acids include but are not limited to, glycolic acid, hydroxybutyric acid, hydroxycaproic acid, hydroxyvaleric acid, 7-hydroxyheptanoic acid, 8-hydroxycaproic acid, 9-hydroxynonanoic acid, or lactic acid; or those derived from pivalolactone, ε-caprolactone or L,L, D,D or D,L lactides.

Exemplary copolymers derived from furan dicarboxylic acid, at least one of a diol, polyol, a polyfunctional acid, or a hydroxyl acid include, but are not limited to, copolymer of ethylene glycol, 2,5-furandicarboxylic acid and terephthalic acid; copolymer of ethylene glycol, 2,5-furandicarboxylic acid and succinic acid; copolymer of ethylene glycol, 2,5-furandicarboxylic acid and adipic acid; copolymer of ethylene glycol, 2,5-furandicarboxylic acid and sebacic acid, copolymer of ethylene glycol, 2,5-furandicarboxylic acid and isosorbide; copolymer of ethylene glycol, 2,5-furandicarboxylic acid and isomannide.

In an embodiment, at least one of PEF or PET in the PEF/PET blend is biobased. In an embodiment, the PET in the PEF/PET blend comprises at least some amount of recycled PET.

In an embodiment the PEF in the PEF/PET blend has an intrinsic viscosity (IV) in the range of 0.25-1.25, or 0.45-1.05, or 0.65-0.85. In an embodiment the PET in the PEF/PET blend has an IV in the range of 0.6-1.0, or 0.7-0.9, or 0.8-0.85.

The step of making a PEF/PET blend may comprise adding additives to the PEF/PET blend. Any suitable additive can be used, including, but not limited to process aids and property modifiers, such as plasticizers, softeners, pigments, antioxidants, stabilizers, anti-plasticizers, fillers, flame retardants, UV absorbents, colorants; dyes; nanoparticles; nucleating agents; anti-stats; reheat agents; and any other known to add value to polymer. In an embodiment, transesterification inhibitor or a transesterification catalyst may be added to control the degree of transesterification that may happen during the melt blending of PEF and PET.

The process of making a bottle with improved shelf life further comprises making a blend preform by injection molding the PEF/PET blend in a standard PET preform and then stretch blow molding the blend preform in a standard PET mold to form a blend bottle, wherein the blend preform and the blend bottle are made under substantially similar processing conditions as used to make a standard PET preform and a standard PET bottle respectively.

The steps of injection molding and stretch blow molding can be accomplished in an integrated injection-stretch blow molding machine, where injection molding of the preform and stretch blow molding of the preform to a bottle are combined in one machine or can be done separately, where first injection molded preforms are formed at a high rate in one machine and the preforms are then later stretch blow molded in a second and separate machine to make the bottles.

In the injection molding step of the method, an extruder is used to inject the PEF/PET blend into a standard PET preform mold where the blend takes the shape of the preform mold and then is rapidly cooled and released to provide a blend preform. The blend preform is typically in the shape of a tube with a threaded opening at the top.

The step of injection molding the PEF/PET blend comprises processing the PEF/PET blend through a barrel having one or more temperature zones at a temperature in the range of 230°C to 325°C. In other embodiments, the temperature can be in the range of from 240°C to 320°C or from 250°C to 310°C or from 260°C to 300°C.

The process further comprises reheating the blend preform and placing it in a standard PET bottle mold as is well known in the art. The preform is heated to a sufficiently high temperature to retain dimensional stability prior to

entering the mold while allowing for elongation via mechanical and pressure-driven methods inherent to the stretch blow molding process. The heat distribution (axially and radially) and residence time associated with the reheat step are applied to the preform in such a way as to soften the material and retain dimensional stability while controlling cold crystallization behavior (i.e., between $T_g$ and $T_m$) that allows for successful orientation under typical blowing conditions to avoid rupture and form a bottle. The preform temperature after exiting the reheat stage and prior to blow molding may be in the range of 75-125 °C or 85-115 °C or 95-105 °C. The softened blend preform is then stretched to desired length as defined by the mold design. Compressed air is then blown into the stretched blend preform to expand the preblow balloon to the surface of the bottle mold where its form may be finalized via the high blow condition. Once the bottle is formed, the mold is opened and the finished bottle is removed from the mold cavity.

The two-stage stretch blow molding process is similar to the single-stage, except that the PEF/PET blend preforms are released and cooled to room temperature prior to blow stretch molding. The single-stage process is usually done using one machine, whereas the two-stage process uses preforms that have already been made and cooled. Two stage stretch blow molding is the most commonly used technique for producing high volume items such as carbonated soft drink (CSD) bottles.

The stretch ratios (axial, radial and areal) experienced by the PEF/PET blend during the stretch blow molding process are determined by the standard PET preform design, the bottle mold design and also the process parameters associated with the injection molding and stretch blow molding for bottle production. Composition of the PEF/PET blend and the process employed to create the PEF/PET blend in the melt contribute to determination of the natural stretch ratio of the blend material. The natural stretch ratio of materials is often used to characterize, design, and predict their performance and likelihood of success in stretch blow molding bottles or other containers as a function of the stretch ratio determined by preform design and bottle or container design. Due to inherently different material properties associated with PEF, such as reduced strain hardening behavior and a different natural stretch ratio than PET, bottle blowing conditions for a PEF/PET blend would be expected to deviate significantly from those normally associated with PET. However, surprisingly, at loading in the range of 0.1% to 40% by weight of PEF in the PEF/PET blends, the process conditions associated both with the preform molding and stretch blow molding fall within the ranges common for the production of the standard PET bottles. In an embodiment, the PEF/PET blend is employed to create a bottle from a preform design leading to an areal stretch ratio in the range of 2-30, or 6-22, or 10-14. The natural stretch ratio (NSR) of the PEF/PET blend may be less than the areal stretch ratio as defined by the preform/bottle design and may be dependent on the PEF amount in the PEF/PET blend and the injection molding temperature. In an embodiment, the PEF/PET blend bottle has an axial stretch ratio of 2.4, radial stretch ratio of 4.9, and areal stretch ratio of 11.8.

Bottles made with the process disclosed hereinabove, having 0.1-40% by weight of PEF in PET using the standard PET bottle making preform mold, blow molds, injection molding conditions, and stretch blow molding conditions, show improvement in shelf life compared to a standard PET bottle and have consistent wall thickness and target weight distribution. In an embodiment, the presence of PEF at 0.1-40 wt% in PEF/PET blends produces an improvement in shelf life of at least 2%, or at least 15%, or 20% or at least 25%, or at least 30%, or at least 35%, or at least 40%, or at least 45% or an improvement in the range of 2-50%, or 4-49%.

In an embodiment, each section (top, panel and base) of the bottle produced using the process disclosed hereinabove has less than 25% or less than 15% or less than 5% variation in target weight compared to corresponding sections of a standard PET bottle.

The bottles made with the process disclosed hereinabove can take any suitable shape for CSD bottle application, including but not limited to narrow-mouth bottles having threaded tops and a volume in the range of 59 milliliter to 2 liter, or 177 milliliter to 1 liter, or 296 milliliter to 0.5 liter, although smaller and larger containers can be formed. In an embodiment, the bottle is selected from the group consisting of a 236,588 mL (8 oz) bottle, 295,735 mL (10 oz) bottle, 354,882 mL (12 oz) bottle, 473,176 mL (16 oz) bottle, a 500 mL bottle, a 750 mL bottle, a 1 L bottle and a 2 L bottle.

The bottles of the present disclosure can be used in standard cold fill applications and may be useful for hot fill applications. The bottles of the present disclosure are suitable for carbonated beverages and are normally clear and transparent, but can be modified to have color or to be opaque, rather than transparent, if desired, by adding colorants or dyes, or by causing crystallization of the polymer, which results in opaqueness.

In an aspect, there is a method of improving shelf life of a carbonated beverage stored in a bottle comprising packaging the carbonated beverage in a bottle made from a PEF/PET blend, wherein the amount of PEF is in the range of 0.1-40% by weight, based on the total weight of the blend.

Unless otherwise defined, all technical and scientific terms used herein have the same meaning as commonly understood by one of ordinary skill in the art to which this invention belongs. Although methods and materials similar or equivalent to those described herein can be used in the practice or testing of embodiments of the disclosed compositions, suitable methods and materials are described below.

In addition, the materials, methods, and examples are illustrative only and not intended to be limiting.

Plastic bottles that are to be used in food contact applications, especially, beverage bottles, have certain permeation rate requirements for various gases. For example, the permeation rates of oxygen, carbon dioxide and/or

water vapor must be below certain levels in order to prevent spoilage, loss of carbonation and/or loss of liquid volume. The acceptable gas permeation rates will vary depending upon the type of beverage in the bottle and the requirements in the industry. This is an especially important factor in bottles consisting of PET. Because PET bottles are relatively permeable to both oxygen and carbon dioxide, they must have relatively thick walls in order to provide the desired permeation rates, which adds weight to the bottles. It has been found that the weight of a bottle consisting of PET polymer, especially a drink bottle, can be reduced by about 5 to 35% by weight, by the use of at least 1% by weight to less than or equal to 40% by weight of PEF. For example, if a bottle consisting of polyethylene terephthalate polymer has a weight of 20 grams and has an acceptable rate of permeation to water vapor, oxygen and/or carbon dioxide, then by controlling the transesterification of a melt of a mixture of 89% by weight PET and 11% by weight of PEF and the areal stretch ratio, a bottle can be made weighing, for example, 15 grams and the bottle can still retain rates of permeation to oxygen, carbon dioxide and/or water vapor that are equal to or less than the identically shaped bottle consisting of PET.

In some embodiments, the disclosure relates to a process for reducing the weight of a polyethylene terephthalate bottle comprising:

a) replacing in the range of from 1% to 40% by weight of the polyethylene terephthalate with polyethylene furandicarboxylate;

wherein the PEF/PET bottle has an oxygen permeation rate, a carbon dioxide permeation rate and/or a water vapor permeation rate that is less than or equal to an identically shaped bottle consisting of polyethylene terephthalate polymer and weighing 1.05 to 1.54 times the weight of the PEF/PET bottle;
wherein the degree of transesterification of the polyethylene terephthalate and the polyethylene furandicarboxylate is in the range of from 0.1 to 99.9%; and
wherein the bottle has an areal stretch ratio in the range of from 5 to 25.

The process of "reducing the weight of a polyethylene terephthalate bottle" means forming a PEF/PET bottle wherein the PEF/PET bottle weighs 5 to 35% less than an identically shaped bottle consisting of PET and the PEF/PET bottle still retains gas permeation rates that are equal to or less than the PET bottle. Replacing the PET with PEF means forming a bottle from a relatively lightweight preform, wherein the preform is produced from a blend of both polyethylene terephthalate and polyethylene furandicarboxylate. The preform can be produced by first mixing the desired weight percentages of both polyethylene terephthalate and polyethylene furandicarboxylate polymers. In some embodiments, the weight percentages can be in the range of from 60% to 99% by weight of PET and from 1% to 40% by weight of PEF. The percentages by weight are based on the total amount of the PET and PEF. In other embodiments, the amounts of polyethylene furandicarboxylate can be in the range of from 3 to 35% or from 5 to 30% or from 5 to 25% by weight and the amounts of polyethylene terephthalate can be in the range of from 65 to 97% or from 70 to 95% or from 75 to 95% by weight, respectively, wherein the percentages by weight are based on the total amount of the polyethylene terephthalate and the polyethylene furandicarboxylate. In still further embodiments, the amount polyethylene furandicarboxylate can be 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98 or 99% and the amount of polyethylene terephthalate can be 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98 or 99% by weight, wherein the percentages by weight are based on the total amount of the polyethylene terephthalate and the polyethylene furandicarboxylate.

It is well known that the measurement of permeation rates for various gases through polymers has a measure of inherent variability. Therefore, due to the known variability in measuring the various permeation rates for oxygen, carbon dioxide and/or water vapor, the relatively lightweight PEF/PET bottle will be considered to have a permeation rate that is "equal to or less than" an identically shaped bottle consisting of PET and weighing 1.05 to 1.54 times the weight of the PEF/PET bottle, if the permeation rates, when measured using the ASTM methods given in the examples, of the PEF/PET bottle is at most 10% greater. For example, if the average of three oxygen permeation rate measurements for a 100% PET bottle weighing 25 grams is 0.2 cc/package.day.atm in a 100% $O_2$ atmosphere, then the permeation rate for an identically shaped PEF/PET bottle containing 20% PEF weighing 20 grams is considered to be equal to or less than the 100% PET bottle if the average of three oxygen permeation rate measurements for the PEF/PET bottle is at most 0.22 cc/package.day.atm in a 100% $O_2$ atmosphere. In other embodiments, when the permeation rate of the PEF/PET bottle is at most 9% greater than the rates of the 100% PET bottle, the permeation rate will be considered to be equal to or less than the 100% PET bottle. In still further embodiments, when the permeation rate of the PEF/PET bottle is at most 8% or 7% or 6% or 5% greater than the permeation rate of the 100% PET bottle, the permeation rate will be considered to be equal to or less than the 100% PET bottle. In other embodiments, the PEF/PET bottle can weigh

5, 6, 7, 8, 9, 10, 11, 12, 13, 14, 15, 16, 17, 18, 19, 20, 21, 22, 23, 24, 25, 26, 27, 28, 29, 30, 31, 32, 33, 34 or 35% less than an identically shaped bottle consisting of PET and have a rate of permeation to oxygen, carbon dioxide and/or water vapor that is equal to or less than the PET bottle.

It can be important to control the amount of transesterification in the mixture of the polyethylene terephthalate and the polyethylene furandicarboxylate. In some embodiments, the degree of transesterification can be in the range of from 0.1 to 99.9%. In other embodiments, the degree of transesterification between the PET and the PEF can be in the range of from 10 to 90% or from 20 to 80% or from 30 to 80% or from 40 to 80% or from 50 to 70% or from 40 to 65%. In other embodiments, the degree of transesterification can be 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98 or 99%.

The degree of transesterification can improve the barrier properties of the bottle. It is believed that the degree of transesterification necessary to improve the barrier properties is variable, depending at least on the amounts of polyethylene terephthalate and the polyethylene furandicarboxylate in the mixture. For example, the maximum improvement in the barrier properties for a bottle comprising 90% by weight of polyethylene terephthalate and 10% amorphous polyethylene furandicarboxylate occurs when the degree of transesterification is in the range of from 50 to 70%. In another example, the maximum improvement in the barrier properties for bottle comprising 80% by weight of polyethylene terephthalate and 20% amorphous polyethylene furandicarboxylate occurs when the degree of transesterification is in the range of from 40 to 65%.

The degree of transesterification can be a function of both the processing temperature and the length of time the mixture spends at or above the melt temperature. Therefore, controlling the time and temperature is an important factor in obtaining the desired degree of transesterification. Therefore, the processing temperature to produce the preform can be in the range of from 230°C to 325°C. In other embodiments, the temperature can be in the range of from 240°C to 320°C or from 250°C to 310°C or from 260°C to 300°C. In general, the processing times, that is, the length of time at which the mixture of the PET and PEF spends in the extruder, can be in the range of from 30 seconds to 10 minutes. In other embodiments, the time can be in the range of from 1 minute to 9 minutes or from 1 minute to 8 minutes. In general, with transit times through the extruder being equal, higher temperatures favor higher degrees of transesterification, while shorter times favor lower degrees of transesterification. Additionally, with the extruder temperatures being constant, longer processing times favor a higher degree of transesterification, while shorter processing times favor lower amounts of transesterification. It should also be noted that herein the "temperature" refers to the barrel temperature which is controlled by the operator. The true temperature experienced by the melt typically varies from this value and will be influenced from machine to machine, extruder design, wear, IV of the polymer grade, screw configuration, and other injection parameters.

The areal stretch ratio can also have an influence on the barrier properties of the bottle. The areal stretch ratio of the bottle can be any number in the range of from 5 to 25. In other embodiments, the areal stretch ratio can be any number in the range of from 6 to 25, or 7 to 25, or 8 to 25, or 9 to 25, or 10 to 25, or 11 to 25, or 12 to 25, or 13 to 25, or 14 to 25, or 15 to 25, or 16 to 25, or 17 to 25. In other embodiments, the areal stretch ratio can be any number from 12 to 25, or 12 to 24, or 12 to 23, or 12 to 21, or 12 to 20, or 12 to 19, or 12 to 18. In other embodiments, the areal stretch ratio can be any number in the range of from 6 to 24, or 7 to 23, or 8 to 22, or 9 to 21, or 10 to 20. In still further embodiments, the areal stretch ratio can be in the range of from 12 to 20, or from 13 to 19, or from 14 to 18.

In other embodiments, the disclosure relates to a process for reducing the weight of a polyethylene terephthalate bottle comprising:

1) blowing a preform to form a bottle;
wherein the preform comprises in the range of from 60% to 99% by weight of polyethylene terephthalate and in the range of from 1% to 40% by weight of polyethylene furandicarboxylate having a degree of transesterification between the polyethylene terephthalate and the polyethylene furandicarboxylate in the range of from 0.1 to 99.9%;
wherein the oxygen permeation rate, the carbon dioxide permeation rate and/or the water vapor permeation rate is less than or equal to a bottle consisting of PET polymer and having a weight that is 1.05 to 1.54 times the weight of the PEF/PET bottle; and
wherein the areal stretch ratio is in the range of from 5 to 25.

The process of "reducing the weight of the polyethylene terephthalate bottle" by blowing a preform to form the bottle refers to the weight of a preform comprising polyethylene terephthalate and polyethylene furandicarboxylate relative to the weight of a preform consisting of polyethylene terephthalate. In order to reduce the weight of the bottle, a preform is produced wherein the preform comprises in the range of from 60% to 99% by weight of polyethylene terephthalate and 1% to 40% by weight of polyethylene furandicarboxylate and the PEF/PET preform weighs 5 to 35% less than the PET preform, yet the bottle produced from the preform has a gas permeation rate that is less than or equal

to an identically shaped bottle consisting of PET.

In other embodiments, the disclosure relates to a process comprising:

i) heating a mixture comprising in the range of from 1% to 40% by weight of polyethylene furandicarboxylate and in the range of from 60% to 99% by weight of polyethylene terephthalate to form a polymer melt, wherein the percentages by weight are based on the total weight of the polymer melt; and
ii) forming a preform from the polymer melt, wherein:
the degree of transesterification between the polyethylene furandicarboxylate and the polyethylene terephthalate is in the range of from 0.1% to 99.9%.

The process can further comprise the step of:
iii) blowing the preform to form a bottle, wherein the areal stretch ratio of the bottle is in the range of from 5 to 25.

The process comprises a first step:

i) heating a mixture comprising in the range of from 1% to 40% by weight of polyethylene furandicarboxylate and in the range of from 60% to 99% by weight of polyethylene terephthalate to form a polymer melt, wherein the percentages by weight are based on the total weight of the polymer melt.

The heating of the mixture can be accomplished using any of the known heating techniques. In general, the heating step can take place in an apparatus that can also be used to produce the preform, for example, using an extruder and/or injection molding machine. In some embodiments, the mixture comprises or consists essentially of 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39 or 40% by weight of polyethylene furandicarboxylate, based on the total weight of polyethylene terephthalate and polyethylene furandicarboxylate, can be blended as particles in the desired weight ratio to form the mixture prior to heating the mixture. In other embodiments, the desired weight percentages of PET and PEF can be fed separately to the same or different heating zones of the extruder. The particles can be in the form of, for example, powders, flakes, pellets or a combination thereof.

The mixture of particles can be fed to the extruder where the mixture enters one or more heating zones and is conveyed along at least a portion of the length of the extruder to form the polymer melt. In the extruder, the polymer melt may be subject to one or more heating zones each independently operating at the same or different temperatures. The heating zones typically operate at a temperature in the range of from 230°C to 325°C and the extruder provides at least some mixing to the polymer melt. In other embodiments, the temperature can be in the range of from 240°C to 320°C or from 250°C to 310°C or from 260°C to 300°C. The intimate contact of the polyethylene terephthalate and the polyethylene furandicarboxylate in the polymer melt can result in a degree of transesterification between the two polymers, thereby forming a blend comprising or consisting essentially of PET, PEF and a copolymer comprising repeat units from both polymers. The degree of transesterification can be in the range of from 0.1% to 99.9%. In other embodiments, the degree of transesterification between the PET and the PEF can be in the range of from 10 to 90% or from 20 to 80% or from 30 to 80% or from 40 to 80% or from 50 to 70% or from 40 to 65%. In other embodiments, the degree of transesterification can be 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70, 71, 72, 73, 74, 75, 76, 77, 78, 79, 80, 81, 82, 83, 84, 85, 86, 87, 88, 89, 90, 91, 92, 93, 94, 95, 96, 97, 98 or 99%. Dependent upon the degree of transesterification, the final product can form a relatively homogeneous product. In other embodiments, the preform or the bottle comprises a continuous phase of polyethylene terephthalate and a discontinuous phase of polyethylene furandicarboxylate. The products wherein the PEF forms a discrete phase within the continuous PET phase can be referred to as a salt-and-pepper blend or a masterbatch. When the proportion of polyethylene furandicarboxylate is greater than 40% by weight it becomes more difficult to produce bottles having a continuous phase of PET and a discontinuous phase of PEF.

The process also comprises the step of ii) forming a preform from the polymer melt. The polymer melt from step i) can be injection molded into a mold having the shape of the preform. Typically, the mold is defined by a female mold cavity mounted to a cavity plate and a male mold core mounted to a core plate. The two pieces of the mold are held together by force, for example, by a clamp and the molten polymer mixture is injected into the mold. The preform is cooled or allowed to cool. The mold pieces can be separated and the preform removed from the mold. The preform can have a variety of shapes and sizes depending upon the desired shape and size of the bottle to be produced from the preform.

The process can further comprise the step of iii) blowing the preform to form a bottle. In some embodiments, the bottle can be blown from the preform shortly after the preform has been produced, that is, while the preform still retains enough heat to be shaped into the bottle, for example, shortly after formation up to about 1 hour. In other embodiments, the preform can be cooled and the desired bottle can be formed at a later time, more than 1 hour to 1

year or more after formation of the preform. Typically, the preform is blow molded to form the bottle at a temperature in the range of from 100 to 110°C using any of the known blow molding techniques. The molding of the preform into a bottle biaxially stretches the preform. The amount of stretching from the initial dimensions of the preform to the dimensions of the bottle can be used to determine the areal stretch ratio. It has also been found that the areal stretch ratio of the bottle can affect the gas permeation rate. The areal stretch ratio" means the product of the axial stretch ratio times the hoop stretch ratio. The phrase "axial stretch ratio" means the (bottle working height)/(preform working length). The phrase "hoop stretch ratio" means the (maximum bottle internal diameter)/(preform internal diameter). In some embodiments, the areal stretch ratio can be in the range of from 13 to 20 or from 14 to 19 or from 15 to 19 or from 15.5 to 19. In other embodiments, the areal stretch ratio can be any number in the range of from 6 to 25, or 7 to 25, or 8 to 25, or 9 to 25, or 10 to 25, or 11 to 25, or 12 to 25, or 13 to 25, or 14 to 25, or 15 to 25, or 16 to 25, or 17 to 25. In other embodiments, the areal stretch ratio can be any number from 12 to 25, or 12 to 24, or 12 to 23, or 12 to 21, or 12 to 20, or 12 to 19, or 12 to 18. In other embodiments, the areal stretch ratio can be any number in the range of from 6 to 24, or 7 to 23, or 8 to 22, or 9 to 21, or 10 to 20. In still further embodiments, the areal stretch ratio can be in the range of from 12 to 20, or from 13 to 19, or from 14 to 18.

In the foregoing specification, the concepts have been disclosed with reference to specific embodiments. However, one of ordinary skill in the art appreciates that various modifications and changes can be made without departing from the scope of the invention as set forth in the claims below.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all embodiments.

It is to be appreciated that certain features are, for clarity, described herein in the context of separate embodiments, may also be provided in combination in a single embodiment. Conversely, various features that are, for brevity, described in the context of a single embodiment, may also be provided separately or in any sub combination. Further, reference to values stated in ranges include each and every value within that range.

The concepts disclosed herein will be further described in the following examples, which do not limit the scope of the invention described in the claims. All parts and percentages are by weight unless otherwise indicated. Examples prepared according to the process or processes of the current invention are indicated by numerical values.

Non-limiting examples of the processes disclosed herein include:

Embodiment 1. A process for reducing the weight of a polyethylene terephthalate (PET) bottle comprising:

a) replacing in the range of from 1% to 40% by weight of the polyethylene terephthalate with polyethylene furandicarboxylate (PEF);
wherein the PEF/PET bottle has an oxygen permeation rate, a carbon dioxide permeation rate and/or a water permeation rate that is less than or equal to an identically shaped bottle consisting of polyethylene terephthalate polymer and weighing 1.05 to 1.54 times the weight of the PEF/PET bottle;
wherein the degree of transesterification of the polyethylene terephthalate and the polyethylene furandicarboxylate is in the range of from 0.1 to 99.9%; and
wherein the bottle has an areal stretch ratio in the range of from 5 to 25.

Embodiment 2. A process for reducing the weight of a polyethylene terephthalate (PET) bottle comprising:

1) blowing a preform to form a bottle;
wherein the preform comprises in the range of 60% to 99% by weight of polyethylene terephthalate and 1% to 40% by weight of polyethylene furandicarboxylate and having a degree of transesterification between the polyethylene terephthalate and the polyethylene furandicarboxylate is in the range of from 0.1 to 99.9%;
wherein the oxygen permeation rate, the carbon dioxide permeation rate and/or the water vapor permeation rate is less than or equal to an identically shaped bottle consisting of PET polymer and having a weight that is 1.05 to 1.54 times the weight of the PEF/PET bottle; and
wherein the areal stretch ratio is in the range of from 5 to 25

Embodiment 3. The process of embodiment 1 or 2 wherein the amount of polyethylene furandicarboxylate is in the range of from 2 to 30% by weight, based on the total amount of polyethylene terephthalate and polyethylene furandicarboxylate.
Embodiment 4. The process of any one of embodiments 1, 2 or 3 wherein the bottle has an areal stretch ratio in the range of from 10 to 20.
Embodiment 5. The process of any one of embodiments 1, 2, 3 or 4 wherein the degree of transesterification is in

the range of from 10 to 90%.

Embodiment 6. The process of any one of embodiments 1, 2, 3, 4 or 5 wherein the polyethylene furandicarboxylate comprises a titanium alkoxide catalyst and the polyethylene terephthalate comprises an antimony catalyst.

Embodiment 7. The process of any one of embodiments, 1, 2, 3, 4, 5 or 6, wherein the bottle comprises a continuous phase of polyethylene terephthalate and a discontinuous phase of polyethylene furandicarboxylate.

Embodiment 8. The process of any one off embodiments 1, 2, 3, 4, 5, 6 or 7 wherein the polyethylene furandicarboxylate has a weight average molecular weight in the range of from 150 to 300,000 Daltons.

Embodiment 9. The process of any one of embodiments 1, 2, 3, 4, 5, 6, 7 or 8 wherein the bottle is a monolayer bottle or wherein the bottle is a multilayer bottle.

Embodiment 10. A process comprising:

i) heating a mixture comprising 1% to 40% by weight of polyethylene furandicarboxylate and 60% to 99% by weight of polyethylene terephthalate to form a polymer melt, wherein the percentages by weight are based on the total weight of the polymer melt; and
ii) forming a preform from the melt, wherein:
the degree of transesterification between the polyethylene terephthalate and the polyethylene furandicarboxylate is in the range of from 0.1 to 99.9%.

Embodiment 11. The process of embodiment 10 further comprising:
iii) blowing the preform to form a bottle.

Embodiment 12. The process of any one off embodiments 10 or 11 wherein the mixture comprises particles of polyethylene terephthalate and particles of polyethylene furandicarboxylate.

Embodiment 13. The process of any one of embodiments 10, 11 or 12 wherein the degree of transesterification is in the range of from 10 to 90%.

Embodiment 14. The process of any one of embodiments 10, 11, 12 or 13 wherein the polyethylene furandicarboxylate comprises a titanium alkoxide and the polyethylene terephthalate comprises antimony.

Embodiment 15. The process of any one of embodiments 10, 11, 12, 13 or 15 wherein the preform comprises a continuous phase of polyethylene terephthalate and a discontinuous phase of polyethylene furandicarboxylate.

Embodiment 16. The process of any one of embodiments 10, 11, 12, 13, 14 or 15 wherein the polyethylene furandicarboxylate has a weight average molecular weight in the range of from 150 to 300,000 Daltons.

Embodiment 17. The process of any one of embodiments 10, 11, 12, 13, 14, 15 or 16 wherein the bottle has an oxygen permeation rate or a carbon dioxide permeation rate that is less than or equal to an identically shaped bottle produced from a PET preform weighing 1.05 to 1.54 times the weight of the PEF/PET preform.

Embodiment 18. The process of any one of embodiments 10, 11, 12, 13, 14, 15, 16 or 17 wherein the preform is a single layer of a polymer or wherein the preform is a multilayered structure comprising two or more layers.

Embodiment 19. The process of any one of embodiments 10, 11, 12, 13, 14, 15, 16, 17 or 18 wherein the amount of polyethylene furandicarboxylate is in the range of from at least 1% by weight to less than or equal to 30% by weight.

Embodiment 20. The process of any one of embodiments 10, 11, 12, 13, 14, 15, 16, 17, 18 or 19 wherein the bottle has an areal stretch ratio in the range of from 10 to 20.

## EXAMPLES

### Materials

Poly(ethylene-2,5-furandicarboxylate) (PEF) was synthesized according to the method below.

Polyethylene terephthalate used was POLYCLEAR® 1101 polyethylene terephthalate having an intrinsic viscosity of 0.86 dL/g, available from Auriga Polymers, Inc. Spartanburg, South Carolina.

## TEST METHODS

### Intrinsic Viscosity

Intrinsic viscosity (IV) was determined using the Goodyear R-103B Equivalent IV method, using PET T-3, DuPont™ SELAR® PT-X250, DuPont™ SORONA® 2864 as calibration standards on a VISCOTEK® Forced Flow Viscometer Model Y-501C. Methylene chloride was the carrier solvent, and a 50/50 mixture of methylene chloride/trifluoro acetic acid was the polymer solvent. Samples were prepared at 0.4 %(w/v), and shaken overnight at room temperature.

## Interaction Polymer Chromatography (IPC)

IPC was used to monitor the degree of transesterification in a polyester blend and also to characterize chemical composition heterogeneity and microstructure of polyester blends using an Alliance 2690™ chromatography system from Waters Corporation (Milford, Massachusetts), with a Waters PDA UV/Vis spectrometer model 2996 and Evaporative Light Scattering detector ELSD 1000 from Agilent Technologies (US). A NovaPak™ C18 silica-based 4.6 x 150 mm HPLC column from Waters was used with a $H_2O$-1,1,1,3,3,3-hexafluoro-2-propanol (HFIP) linear gradient (from 20 to 100% HFIP) mobile phase. Chromatography was run at 35°C, 0.5 mL/min flow rate, with UV spectrum extracted at various wavelengths, using an injection volume of 10 microliters (uL). Data was collected and analyzed with Waters Empower Version 3 software, customized for IPC analyses.

The polymer samples were prepared by dissolution in neat HFIP for at least 4 hours at room temperature with moderate agitation. The polymer sample concentrations are selected to be close to 1 milligram/milliliter. The polymer sample solutions are filtered with 0.45 μm PTFE membrane filter prior to injection into the chromatographic system. Due to day to day variations in the retention times, relevant homopolymers solutions were run in conjugation with blended samples.

## Transesterification Determination by IPC

The degree of transesterification was determined by an IPC method. This approach allows for separation of complex polymers by polarity (chemistry) of the polymer chains rather than their molecular size, which makes this approach complementary to size exclusion chromatography (SEC). When applied to polymer and/or copolymer blends, IPC separates macromolecules by chemical composition and microstructure, e.g. degree of blockiness. Thus, as shown in Y. Brun, P. Foster, Characterization of synthetic copolymers by interaction polymer chromatography: separation by microstructure, J. Sep. Sci. 2010, v. 33, pp.3501-351, the copolymer chains elute between corresponding homopolymer chains, and the retention always increases with degree of blockiness. For example, a statistical A/B (50/50) copolymer elutes later than the alternating copolymer, but before a block-copolymer with same (50/50) composition. When a copolymer sample contains chains with various chemical compositions, the IPC fractionates them by this composition, and in such way reveals chemical composition distribution of the copolymer. Similarly, the estimation of chemical heterogeneity by chain microstructure (blockiness) could be also obtained from the IPC experiments.

An IPC method was developed to separate blends of aromatic and furan-based polyesters by chemistry of the polymer chains to estimate the degree of transesterification in polymer chains. In the extreme case of a polymer blend without any exchange reaction, the resulting IPC trace will produce two peaks corresponding to original homopolymers. In another extreme case of full transesterification, a single narrow peak corresponding to random copolymer will elute in the position between the two homopolymer peaks. The retention time of this peak apex is dependent on the composition of the copolymer and the degree of its blockiness, which could be quantified through the blockiness index (B)-number (see description below). In all intermediate cases of partial transesterification, the IPC chromatogram will be described by a broad multimodal curve, representing fractions of different degree of transesterification.

## Gas Barrier Testing

Produced samples (bottles) were tested for oxygen ($O_2$) barrier properties characterized as transmission rate (cubic centimeters (cc) / [package.day.atm] measured at 22°C, 50% relative humidity (RH) external) according to ASTM method F1307. Details of the test conditions are given below:

- Oxygen transmission rate testing:
    - Testing unit: MOCON OX-TRAN® 2/61 (bottles)
    - Temperature: 22°C
    - Environment: 50% RH
    - Permeant: 100% oxygen

The bottles were tested for carbon dioxide ($CO_2$) barrier properties characterized as shelf life (weeks at 22°C, 0% RH internal, 50% RH external) according to the FTIR method outlined in US 5,473,161 .

Per widely accepted standards the shelf life was defined as the time for a package to display 21.4% loss of the total initial carbonation charge. The initial carbonation charge target was specified as 4.2 volumes of $CO_2$ per volume of the package and was delivered via a specific mass of dry ice. Details of the test conditions are given below:

- Carbon dioxide shelf life testing:

- Temperature: 22°C
- Environment: 50% RH
- Permeant: 100% carbon dioxide

**Synthesis of Poly(ethylene-2,5-furandicarboxylate) (PEF)**

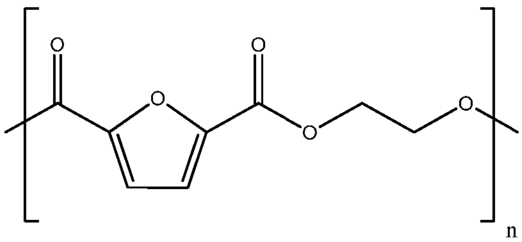

**Step 1: Preparation of a PEF pre-polymer by polycondensation of MEG and FDME**

2,5-furandimethylester (27,000 g), monoethylene glycol (18,201 g), titanium (IV) butoxide (30.0 g), were charged to a 56L stainless steel stirred reactor equipped with a stirring rod, agitator, and condenser tower. A nitrogen purge was applied and stirring was commenced at 51 rpm to form a slurry. While stirring, the reactor was subject to a weak nitrogen purge to maintain an inert atmosphere. While the reactor was heated to the set point of 245°C methanol evolution began at a batch temperature of about 155°C. Methanol distillation continued for about 165 minutes during which the batch temperature increased from 155°C to 245°C. Following completion of the methanol distillation a vacuum ramp was initiated that reduced the pressure from 101325 Pa (760 Torr) to 3.322 (1 Torr) over a 185 minute period. The mixture, when at 133.322 Pa (1 Torr), was left under vacuum and stirring for about 225 min, reaching a minimum pressure of about 130.656 Pa (0,98 Torr) in addition to periodic reduction in the stirring rate, after which nitrogen was used to pressurize the vessel back to 101325 Pa (760 Torr).

The PEF pre-polymer was recovered by pumping the melt through an exit valve at the bottom of the vessel equipped with a six-hole die and into a water quench bath. The thus formed strands were strung through a pelletizer, equipped with an air jet to dry the polymer free from moisture, cutting the polymer strand into pellets. Yield was approximately 15210 g. IV ~ 0.49 dL/g.

**Step 2: Preparation of high molecular weight PEF polymer by solid phase polymerization of the PEF pre-polymer of Step 1**

In order to increase the molecular weight of the PEF pre-polymer (described above) solid phase polymerization was conducted using a rotating double-cone drier. The quenched and pelletized PEF pre-polymer was initially crystallized by placing the material in a rotating double-cone drier, subsequently heating the pellets under a nitrogen purge to 145°C for 4 h. Following removal of any fines or overs, the crystallized PEF pre-polymer was placed back in the rotating double-cone drier and the temperature was increased to 200°C under vacuum to build molecular weight during a total duration of 54 hours. The oven was turned off and the pellets allowed to cool. The obtained pellets had a measured IV ~0.82 dL/g.

**Example 1: PEF/PET blends for low temperature injection molding of preforms, 500 mL bottle blowing, and demonstration of carbonated bottle shelf life**

PET was dried overnight under vacuum at 145°C prior to processing. PEF was dried overnight under vacuum at 155°C prior to processing. Dried pellets of PEF and PET were individually weighed out and combined in Mylar® bags to create blends with between 10-40 wt % PEF prior to injection molding with a 23.3 g preform mold. The sample bags were shaken by hand prior to molding to encourage homogeneous mixing of the pellets. For each state the corresponding Mylar® bag was cut open and secured around the feed throat of the Arburg 420C to allow for gravimetric feeding. Injection molding of preforms was carried out on an Arburg 420C with a valve-gated hot runner end cap and a 35 mm general purpose screw configuration. The injection molding conditions were optimized to produce acceptable preforms with minimum molded-in stresses and no visual defects per the specified minimum barrel temperature of 270°C. Table 1 provides the injection molding conditions employed for each sample.

Preforms used to blow bottles were allowed to equilibrate at ambient temperature and relative humidity for a minimum of 12 h prior to bottle blowing. The molded preforms were stretch blow molded into 500 mL bottles under the

conditions listed in Table 2, so finalized to allow for optimum weight distribution and consistent sidewall thickness of the obtained bottle for each state. All bottles were blown on a Sidel SBO1/2 lab reheat stretch blow molding machine. The blow molding conditions listed in Table 2 were used to produce 500 mL straight wall bottles. The chosen preform design and bottle design determine that the PEF/PET blend experiences directional elongation during bottle blowing described by the following stretch ratios: 2.4 (axial), 4.9 (radial), areal (11.8). Due to the presence of PEF and the inherently different material properties associated with PEF, bottle blowing conditions would be expected to deviate significantly from those normally associated with PET. Due to the use of blends of PEF in PET at low loadings (<50%) the process conditions associated both with preform molding and bottle blowing fall within the ranges common for production of PET bottles, as shown in Tables 1 and 2. The percent difference in terms of process conditions with relation to the PET control molded at 270°C for each bottle blowing parameter generally increased along with increased wt % of PEF in the blend. Bottles with consistent wall thickness and target weight distribution were achieved for 10-40% PEF blends with PET while preserving the ability to employ a preform design, bottle design, injection molding conditions, and bottle blowing conditions common for PET.

The produced 500 mL PEF/PET blend bottles were pressure tested to confirm their ability to sustain a minimum pressure of 1034213.593 Pa (150 psi). A minimum of 12 bottles for each state was characterized for carbonation loss via the FTIR method (described above) over seven weeks to allow estimation of the carbonated shelf life. The bottle shelf life data is provided in Table 7.

**Table 1: Low temperature (270°C) injection molding conditions for PEF/PET blend preforms**

| | Resin Composition | 10% PEF in PEF/PET blend | 20% PEF in PEF/PET blend | 40% PEF in PEF/PET blend |
|---|---|---|---|---|
| **Process Description** | **Preform** | **1** | **2** | **3** |
| | Preform Wt (g) | 23.3 | 23.3 | 23.3 |
| | Mold Temp (°F) | 45.0 | 45.0 | 45.0 |
| | Dryer Temp (°F) | 248.0 | 248.0 | 248.0 |
| **Barrel Temperature** | Feed (°C) | 270 | 270 | 270 |
| | Zone 2 (°C) | 270 | 270 | 270 |
| | Zone 3 (°C) | 270 | 270 | 270 |
| | Zone 4 (°C) | 270 | 270 | 270 |
| | Nozzle (°C) | 280 | 270 | 280 |
| **Injection** | Inj. Press. 1 (bar) | 1500 | 1500 | 1500 |
| | Inj. Press. 2 (bar) | 1000 | 1000 | 1000 |
| | Inj. Time (sec) | 1.8 | 2.4 | 2.4 |
| | 1st Injection Speed (ccm/sec) | 12.0 | 12.0 | 12.0 |
| | 2nd Injection Speed (ccm/sec) | 10.0 | 10.0 | 10.0 |

(continued)

| | Resin Composition | 10% PEF in PEF/PET blend | 20% PEF in PEF/PET blend | 40% PEF in PEF/PET blend |
|---|---|---|---|---|
| **Process Description** | **Preform** | **1** | **2** | **3** |
| **Holding Pressure** | Switch-Over Point (ccm) | 7.0 | 7.0 | 7.0 |
| | 1st Hold Pressure (bar) | 300 | 300 | 300 |
| | 2nd Hold Pressure (bar) | 300 | 300 | 300 |
| | 1st Hold Pr. Time (sec) | 1.0 | 1.0 | 1.0 |
| | 2nd Hold Pr. Time (sec) | 8.0 | 8.0 | 8.0 |
| | Remain Cool Time (sec) | 16.0 | 16.0 | 16.0 |
| **Dosage** | Circumf. Speed (m/min) | 5.5 | 5.5 | 5.5 |
| | Back Pressure (bar) | 25.0 | 25.0 | 25.0 |
| | Dosage Volume (ccm) | 27.0 | 27.0 | 27.0 |
| | Meas. Dosage Time (sec) | 6.6 | 6.6 | 6.7 |
| | Cushion (ccm) | 4.4 | 4.3 | 4.3 |
| **Process & Preform Data** | Cycle Time (sec) | 31.0 | 31.1 | 31.0 |
| | Fill Time (sec) | 2.4 | 2.4 | 2.4 |
| | Plastic Pressure (bar) | 720 | 640 | 610 |

**Table 2: Stretch blow molding conditions for 500 mL bottles from PEF/PET blend preforms molded at low temperature (270°C)**

| Resin Composition | 10% PEF in PEF/PET blend | 20% PEF in PEF/PET blend | 40% PEF in PEF/PET blend |
|---|---|---|---|
| **Bottle** | **1** | **2** | **3** |
| Speed (bph) | 1000 | 1000 | 1000 |
| Overall | 100 | 100 | 100 |
| Oven Lamp Settings | | | |
| Zone 6 | 100 | 100 | 100 |
| Zone 5 | 75 | 75 | 90 |
| Zone 4 | 53 | 53 | 47 |
| Zone 3 | 40 | 40 | 40 |
| Zone 2 | 15 | 15 | 13 |

(continued)

| Resin Composition | 10% PEF in PEF/PET blend | 20% PEF in PEF/PET blend | 40% PEF in PEF/PET blend |
|---|---|---|---|
| **Bottle** | **1** | **2** | **3** |
| Zone 1 | 25 | 23 | 25 |
| Stretching Speed | 0.9 | 0.5 | 0.75 |
| Preform Temp. (°C) | 89 | 91 | |
| **Blow Timing/ Pressures** | | | |
| Cycle Time | 2.14 | 2.14 | 2.18 |
| Low Blow Position (mm) | 190 | 190 | 190 |
| Low Pressure (bar) | 10.5 | 10.5 | 10.5 |
| High Blow Position (mm) | 285 | 285 | 285 |
| High Blow Pressure (bar) | 40 | 40 | 40 |
| Preblow Flow (bar) | 2 | 2.5 | 2 |
| Body Mold Temp (°F) | 45 | 45 | 45 |
| Base Mold Temp. (°F) | 45 | 45 | 45 |
| Top Weight (g) | 7.7 | 7.8 | 7.6 |
| Panel Weight (g) | 5.3 | 5.4 | 4.3 |
| 2nd Panel Weight (g) | 5.3 | 5.4 | 5.9 |
| Base Weight (g) | 5.5 | 5.4 | 6.2 |

**Example 2: PEF/PET blends for high temperature injection molding of preforms, 500 mL bottle blowing, and demonstration of carbonated bottle shelf life**

The injection molding conditions for the states described in Example 2 were optimized to produce acceptable preforms with minimum molded-in stresses and no visual defects per the minimum barrel temperature of 290°C. Table 3 provides the injection molding conditions employed for each sample. All other steps were carried out according to the details described in Example 1.

The stretch blow molding process was carried out according to the details described in Example 1. Blow molding conditions listed in Table 4 were used with the same bottle design as Example 1 to produce 500 mL bottles. The chosen preform design and bottle design determine that the PEF/PET blend experiences directional elongation during bottle blowing described by the following stretch ratios: 2.4 (axial), 4.9 (radial), areal (11.8). Due to the presence of PEF and the inherently different material properties associated with PEF bottle blowing conditions would be expected to deviate significantly from those normally associated with PET. Due to the use of blends of PEF in PET at low loadings (<50%) the process conditions associated both with preform molding and bottle blowing fall within the ranges common for production of PET bottles as shown in Tables 3 and 4. The percent difference in process conditions with relation to the PET control molded at 290°C for each bottle blowing parameter generally increased along with increased wt % of PEF in the blend. However, with relation to the corresponding PET control the percent differences were generally less than those for the examples molded at 270°C. Bottles with consistent wall thickness and target weight distribution were achieved for 10-40% PEF blends with PET while preserving the ability to employ a preform design, bottle design, injection molding conditions, and bottle blowing conditions common for PET.

The produced 500 mL PEF/PET blend bottles were pressure tested to confirm their ability to sustain a minimum pressure of 1034213.593 Pa (150 psi). A minimum of 12 bottles for each state was characterized for carbonation loss via the FTIR method (described above) over seven weeks to allow estimation of the carbonated shelf life. The bottle shelf life data is provided in Table 7.

**Table 3: High temperature (290°C) injection molding conditions for PEF/PET blend preforms**

| | Resin Composition | 10% PEF in PEF/PET blend | 20% PEF in PEF/PET blend | 40% PEF in PEF/PET blend |
|---|---|---|---|---|
| **Process Description** | **Preform** | **4** | **5** | **6** |
| | Preform Wt (g) | 23.3 | 23.3 | 23.3 |
| | Mold Temp (°C) | 7.2 | 7.2 | 7.2 |
| | Dryer Temp (°C) | 120 | 120 | 120 |
| **Barrel Temp.** | Feed (°C) | 290 | 290 | 290 |
| | Zone 2 (°C) | 290 | 290 | 290 |
| | Zone 3 (°C) | 290 | 290 | 290 |
| | Zone 4 (°C) | 290 | 290 | 290 |
| | Nozzle (°C) | 290 | 290 | 290 |
| **Injection** | Inj. Press. 1 (bar) | 1500 | 1500 | 1500 |
| | Inj. Press. 2 (bar) | 1000 | 1000 | 1000 |
| | Inj. Time (sec) | 2.3 | 2.3 | 2.3 |
| | 1st Injection Speed (ccm/sec) | 12.0 | 12.0 | 12.0 |
| | 2nd Injection Speed (ccm/sec) | 10.0 | 10.0 | 10.0 |
| **Holding Press.** | Switch-Over Point (ccm) | 7.0 | 7.0 | 7.0 |
| | 1st Hold Pressure (bar) | 300 | 300 | 300 |
| | 2nd Hold Pressure (bar) | 300 | 300 | 300 |
| | 1st Hold Pr. Time (sec) | 1.0 | 1.0 | 1.0 |
| | 2nd Hold Pr. Time (sec) | 8.0 | 8.0 | 8.0 |
| | Remain Cool Time (sec) | 16.0 | 16.0 | 16.0 |
| **Dosage** | Circumf. Speed (m/min) | 5.5 | 5.5 | 5.5 |
| | Back Pressure (bar) | 25.0 | 25.0 | 25.0 |
| | Dosage Volume (ccm) | 27.0 | 27.0 | 27.0 |
| | Meas. Dosage Time (sec) | 6.6 | 6.7 | 6.7 |
| | Cushion (ccm) | 4.0 | 4.0 | 4.0 |

(continued)

| | Resin Composition | 10% PEF in PEF/PET blend | 20% PEF in PEF/PET blend | 40% PEF in PEF/PET blend |
|---|---|---|---|---|
| **Process Description** | **Preform** | **4** | **5** | **6** |
| **Process & Preform Data** | Cycle Time (sec) | 31.0 | 31.0 | 31.0 |
| | Fill Time (sec) | 2.3 | 2.3 | 2.3 |
| | Plastic Pressure (bar) | 530 | 480 | 470 |

**Table 4**

| Resin Composition | 10% PEF in PEF/PET blend | 20% PEF in PEF/PET blend | 40% PEF in PEF/PET blend |
|---|---|---|---|
| **Bottle** | **4** | **5** | **6** |
| Speed (bph) | 1000 | 1000 | 1000 |
| Overall | 100 | 100 | 100 |
| Oven Lamp Settings | | | |
| Zone 6 | 100 | 100 | 100 |
| Zone 5 | 75 | 90 | 90 |
| Zone 4 | 53 | 47 | 47 |
| Zone 3 | 40 | 40 | 40 |
| Zone 2 | 15 | 13 | 13 |
| Zone 1 | 23 | 25 | 25 |
| Stretching Speed | 0.5 | 0.75 | 0.75 |
| Preform Temp. (°C) | 91 | 90 | |
| **Blow Timing/ Pressures** | | | |
| Cycle Time | 2.14 | 2.18 | 2.18 |
| Low Blow Position (mm) | 190 | 190 | 190 |
| Low Pressure (bar) | 10.5 | 10.5 | 10.5 |
| High Blow Position (mm) | 285 | 285 | 285 |
| High Blow Pressure (bar) | 40 | 40 | 40 |
| Preblow Flow (bar) | 2.5 | 2 | 2 |
| Body Mold Temp (°C) | 7.2 | 7.2 | 7.2 |
| Base Mold Temp. (°C) | 7.2 | 7.2 | 7.2 |
| Top Weight (g) | 7.7 | 7.4 | 7.6 |
| Panel Weight (g) | 5.3 | 5.1 | 4.3 |
| 2nd Panel Weight (g) | 5.3 | 6 | 5.8 |
| Base Weight (g) | 5.5 | 5.4 | 6.4 |

**Comparative Example A: Preparation of 500 mL PEF Bottles in the absence of PET**

Pellets of PEF were individually weighed out in Mylar bags to provide a sample of 100 wt % PEF in the complete absence of PET. This sample was employed to injection mold preforms where the barrel temperature was set to minimize molded-in stresses within the preform resulting in a minimum barrel temperature of 250°C and all other conditions as specified in Table 5. The corresponding preforms were stretch blow molded into 500 mL bottles under the conditions listed in Table 6, so finalized to allow for optimum weight distribution and consistent sidewall thickness of the obtained bottle for each state. Preform and bottle mold designs were the same as those in Examples 1 and 2. The chosen preform design and bottle design determine that the PEF/PET blend experiences directional elongation during bottle blowing described by the following stretch ratios: 2.4 (axial), 4.9 (radial), areal (11.8). Due to the absence of PET and the inherently different material properties associated with PEF the bottle blowing conditions deviated significantly from those normally associated with PET. Bottles were produced and evaluated but the bottle blowing process was considered to be inconsistent. Predictable wall thicknesses and weight distributions of material in the bottle could not be repeatably achieved under a single set of bottle blowing conditions. The best examples of the produced bottles were pressure tested to sustain a minimum pressure of 1034213.593 Pa (150 psi). A minimum of 12 bottles for each state was characterized for carbonation loss via the FTIR method (described above) over seven weeks to allow estimation of the carbonated shelf life. The bottle shelf life data is provided in Table 7 for comparison.

**Comparative Example B: Preparation of 500 mL PET Bottles in the absence of PEF**

Pellets of PET were individually weighed out in Mylar bags to provide samples of 100 wt % PET in the complete absence of PEF. These samples were employed to injection mold preforms where the minimum barrel temperature was held at either 270°C or 290°C and all other conditions were as specified in Table 5. The corresponding preforms were stretch blow molded into 500 mL bottles under the conditions listed in Table 6, so finalized to allow for optimum weight distribution and consistent sidewall thickness of the obtained bottle for each state. Preform and bottle mold designs were the same as those in Examples 1 and 2 and Comparative Example A. The chosen preform design and bottle design determine that the PEF/PET blend experiences directional elongation during bottle blowing described by the following stretch ratios: 2.4 (axial), 4.9 (radial), areal (11.8). Due to the absence of PEF and the inherently different material properties associated with PEF the bottle blowing conditions corresponded to those normally associated with PET. The produced bottles were pressure tested to sustain a minimum pressure of 1034213.593 Pa (150 psi). A minimum of 12 bottles for each state was characterized for carbonation loss via the FTIR method (described above) over seven weeks to allow estimation of the carbonated shelf life. The bottle shelf life data is provided in Table 7 for comparison.

**Table 5**

| | Resin Composition | 100% PEF | 100% PET | 100% PET |
|---|---|---|---|---|
| **Process Description** | **Comparative Preform** | **A** | **B** | **C** |
| | Preform Wt (g) | 23.3 | 23.3 | 23.3 |
| | Mold Temp (°F) | 45.0 | 45.0 | 45.0 |
| | Dryer Temp (°F) | 248.0 | 248.0 | 248.0 |
| **Barrel Temperature** | Feed (°C) | 250 | 270 | 290 |
| | Zone 2 (°C) | 253 | 270 | 290 |
| | Zone 3 (°C) | 256 | 270 | 290 |
| | Zone 4 (°C) | 256 | 270 | 290 |
| | Nozzle (°C) | 256 | 280 | 290 |
| **Injection** | Inj. Press. 1 (bar) | 1500 | 1500 | 1500 |
| | Inj. Press. 2 (bar) | 1000 | 1000 | 1000 |
| | Inj. Time (sec) | 2.4 | 2.3 | 2.4 |
| | 1st Injection Speed (ccm/sec) | 12.0 | 12.0 | 12.0 |
| | 2nd Injection Speed (ccm/sec) | 10.0 | 10.0 | 10.0 |

(continued)

| | Resin Composition | 100% PEF | 100% PET | 100% PET |
|---|---|---|---|---|
| **Process Description** | **Comparative Preform** | **A** | **B** | **C** |
| **Holding Pressure** | Switch-Over Point (ccm) | 7.0 | 7.0 | 7.0 |
| | 1st Hold Pressure (bar) | 300 | 300 | 300 |
| | 2nd Hold Pressure (bar) | 300 | 300 | 300 |
| | 1st Hold Pr. Time (sec) | 1.0 | 1.0 | 1.0 |
| | 2nd Hold Pr. Time (sec) | 8.0 | 8.0 | 8.0 |
| | Remain Cool Time (sec) | 16.0 | 16.0 | 16.0 |
| **Dosage** | Circumf. Speed (m/min) | 5.5 | 5.5 | 5.5 |
| | Back Pressure (bar) | 75.0 | 25.0 | 25.0 |
| | Dosage Volume (ccm) | 27.0 | 27.0 | 27.0 |
| | Meas. Dosage Time (sec) | 7.0 | 6.6 | 6.6 |
| | Cushion (ccm) | 4.9 | 4.4 | 4.3 |
| **Process & Preform Data** | Cycle Time (sec) | 31.1 | 31.1 | 31.0 |
| | Fill Time (sec) | 2.4 | 2.4 | 2.4 |
| | Plastic Pressure (bar) | 720 | 810 | 580 |

**Table 6**

| Resin Composition | 100% PEF - 250 °C melt | 100% PEF - 270 °C melt | 100% PEF - 290 °C melt |
|---|---|---|---|
| **Comparative Bottle** | **A** | **B** | **C** |
| Speed (bph) | 1000 | 1000 | 1000 |
| Overall | 100 | 100 | 100 |
| Oven Lamp Settings | | | |
| Zone 6 | 90 | 100 | 85 |
| Zone 5 | 100 | 50 | 75 |
| Zone 4 | 39 | 50 | 50 |
| Zone 3 | 37 | 50 | 50 |
| Zone 2 | 23 | 45 | 35 |
| Zone 1 | 28 | 40 | 40 |
| Stretching Speed | 0.9 | 0.9 | 0.9 |
| Preform Temp. (°C) | 93 | 99 | 97 |
| **Blow Timing/ Pressures** | | | |
| Cycle Time | 1.9 | 1.8 | 1.8 |
| Low Blow Position (mm) | 190 | 205 | 205 |
| Low Pressure (bar) | 14 | 10 | 10 |
| High Blow Position (mm) | 285 | 285 | 285 |
| High Blow Pressure (bar) | 40 | 40 | 40 |
| Preblow Flow (bar) | 4 | 2 | 2 |

(continued)

| Blow Timing/ Pressures | | | |
|---|---|---|---|
| Body Mold Temp (°F) | 45 | 45 | 45 |
| Base Mold Temp. (°F) | 45 | 45 | 45 |
| Top Weight (g) | | 7.7 | 7.6 |
| Panel Weight (g) | | 5.2 | 5.2 |
| 2nd Panel Weight (g) | | 5.7 | 5.7 |
| Base Weight (g) | | 5.3 | 5.3 |

**Gas Barrier Testing of the As-Produced Bottles**

The as-produced 500 mL PEF/PET blend bottles of Example 1 to 3 and Example 4 to 6; the PEF bottle of Comparative Example A; and PET bottles of Comparative Examples B and C were pressure tested to confirm their ability to sustain a minimum pressure of 150 psi. A minimum of 12 bottles for each state was characterized for carbonation loss via the FTIR method (referenced above) over seven weeks to allow estimation of the carbonated shelf life. The bottle shelf life data is provided in Table 7.

**Table 7**

| Bottle | PEF (wt%) | PET (wt%) | Minimum Barrel Temp. (°C) | Haze (%) | *Shelf Life (wks) | †Steady State Loss (% $CO_2$/wk) | ‡Creep / Sorption (% $CO_2$) |
|---|---|---|---|---|---|---|---|
| C.Ex. A | 100 | 0 | 250 | n/a | 33.8 | 0.56 | 2.40 |
| C.Ex. B | 0 | 100 | 270 | 1.90 | 12.5 | 1.54 | 2.23 |
| C.Ex. C | 0 | 100 | 290 | 1.92 | 11.9 | 1.63 | 1.99 |
| Ex. 1 | 10 | 90 | 270 | 11.50 | 15.4 | 1.26 | 2.05 |
| Ex. 2 | 20 | 80 | 270 | 8.27 | 17.0 | 1.13 | 2.10 |
| Ex. 3 | 40 | 60 | 270 | n/a | 18.6 | 0.98 | 3.18 |
| Ex. 4 | 10 | 90 | 290 | 3.57 | 14.2 | 1.34 | 2.35 |
| Ex. 5 | 20 | 80 | 290 | 1.75 | 15.0 | 1.23 | 2.95 |
| Ex. 6 | 40 | 60 | 290 | n/a | 12.4 | 1.15 | 7.19 |

*Mean shelf life (weeks) of 12 bottles extrapolated to 21.4% loss at 22°C, 50 % RH.
†Determined from slope of linear regression fit to carbonation loss measured with FTIR method.
‡Determined from y-intercept of linear regression fit to carbonation loss measured with FTIR method.

Table 7 summarizes the bottle compositions reflecting melt-mixed injection molded blends of PEF and PET formed into 500 mL straight wall bottles at 270°C. Table 7 also provides the results of characterization of bottle haze (%) and carbonated shelf life (weeks). Shelf life data includes measurement of steady state carbonation loss (% $CO_2$/week) and an estimation of the combined contributions of creep and sorption to the total shelf life as derived from the measurement, corresponding fit via linear regression, and extrapolation to 21.4% $CO_2$ loss from initial charge. The PEF/PET blends exemplified here provide access to a range of shelf life greater than that inherent to 100% PET bottles while allowing for the unanticipated ability to produce blend bottles at the same or very similar conditions to PET. Employment of PEF blended at 10-40 % wt in PET systematically decreases the measured steady state loss (% $CO_2$/wk) for PEF/PET blend bottles, where the steady state loss is shown to be greater for a bottle whose preform was molded at 290°C (Bottles 4-6) than for the compositionally equivalent bottle molded at lower temperature such as shown for 270°C (Bottles 1-3). The steady state loss is a significant contributing factor to shelf life performance, although the

correlation is not direct since shelf life performance is also a factor of creep, sorption, and other minor losses experienced by the bottle. As mentioned, the chemical composition that defines PEF also defines its material properties to be different from PET. The creep/sorption experienced by a 100 % PEF bottle (Comparative Example A) is shown to be greater than that experienced by the control, a 100 % PET bottle (Comparative Example B and C). Large creep/sorption values directly reduce the total measured shelf life of a bottle and therefore are undesirable in this application. For blends of PEF/PET at 20% wt PEF or less and molded at 270°C the estimated bottle creep/sorption is less than both the 100 % PET control and the 100% PEF bottle. For other blends of PEF/PET including those molded at 290°C the estimated bottle creep/sorption is more than both the 100 % PET control and the 100% PEF bottle. The combined bottle performance for steady state loss and creep/sorption balance to provide an improved shelf life of PEF/PET blends compared to the 100% PET control, especially where the loading of PEF is 20 wt% or less.

**Table 8**

| Sample | PEF (wt%) | PET (wt%) | Minimum Barrel Temp. (°C) | *Shelf Life (wks) | %Improvement in Shelf Life | Barrier Improvement Factor (BIF) |
|---|---|---|---|---|---|---|
| C.Ex. B | 0 | 100 | 270 | 12.5 | - | - |
| C.Ex. C | 0 | 100 | 290 | 11.9 | - | - |
| Ex. 1 | 10 | 90 | 270 | 15.4 | 23% | 1.23 |
| Ex. 2 | 20 | 80 | 270 | 17 | 36% | 1.36 |
| Ex. 3 | 40 | 60 | 270 | 18.6 | 49% | 1.49 |
| Ex. 4 | 10 | 90 | 290 | 14.2 | 19% | 1.19 |
| Ex. 5 | 20 | 80 | 290 | 15 | 26% | 1.26 |
| Ex. 6 | 40 | 60 | 290 | 12.4 | 4% | 1.04 |
| *Mean shelf life (weeks) of 12 bottles extrapolated to 21.4% loss at 22°C, 50 % RH. | | | | | | |

Table 8 summarizes the improvement in shelf life and barrier improvement factor of various PEF/PET blend bottle compositions formed by melt-mixed injection molding of blends of PEF and PET into 500 mL straight wall bottles at 270°C or 290°C. As show above, the presence of PEF at 10-40 wt% in PEF/PET blends produces a percent improvement, as defined above, between 4-49% when compared to a PET control bottle of the same design whose corresponding preform was molded at the same temperature as the PEF/PET blends. At 270°C, the % improvement and BIF factor improved with the increase in the amount of PEF from 10 wt% to 40%. However at 290°C, the % improvement and BIF factor both increased with the increase in PEF amount from 10 wt% to 20%, but then decreased with further increase in PEF amount to 40 wt%.

**Preparation of PEF pre-polymer #2 by polycondensation of monoethylene glycol and furan dicarboxylic acid dimethyl ester**

2,5-furandimethylester (27,000 g), monoethylene glycol (18,201 g), titanium (IV) butoxide (38.0 g), were charged to a 56 liter stainless steel stirred reactor equipped with a stirring rod, agitator, and condenser tower. A nitrogen purge was applied and stirring was commenced at 51 rpm to form a slurry. Upon heating above 130°C, the slurry became a solution as the FDME melted. While stirring, the reactor was subject to a weak nitrogen purge to maintain an inert atmosphere. While the autoclave was gradually heated to the set point of 245°C methanol evolution began at a batch temperature of about 155°C. Methanol distillation continued for about 250 minutes during which the batch temperature increased from 155°C to 220°C. Following completion of the methanol distillation a vacuum ramp was initiated that during about 165 minutes reduced the pressure from 101325 Pa (760 Torr) to 133.322 Pa (1 Torr). During the vacuum ramp, heating continued until the setpoint of 245°C was reached at 60 minutes after completion of the methanol distillation. The mixture, when at 133.322 Pa (1 Torr) was left under vacuum and stirring for about 135 minutes (min), reaching a minimum pressure of about 101.325 Pa (0,76 Torr) in addition to periodic reduction in the stirring rate, after which nitrogen was used to pressurize the vessel back to 101325 Pa (760 Torr).

The PEF pre-polymer was recovered by pumping the melt through an exit valve at the bottom of the vessel into a six-hole die which fed six extrudate strands into a water quench bath. The strands were strung through a pelletizer, equipped with an air jet to dry the PEF pre-polymer free from moisture, cutting the pre-polymer strand into pellets. Yield of PEF pre-polymer #2 was approximately 18150 g and the IV was about 0.52 dL/g.

**Preparation of PEF polymer #2 by solid phase polymerization of PEF pre-polymer #2**

In order to increase the molecular weight of PEF pre-polymer #2, solid phase polymerization was conducted using a rotating double-cone dryer. The quenched and pelletized PEF pre-polymer was placed in a rotating double-cone dryer, subsequently heating the pellets under a nitrogen purge to 145°C for 4 hours (h). Following removal of any fines or overs, the PEF pre-polymer was placed back in the rotating double-cone dryer and the temperature was increased to 200°C under vacuum to build molecular weight during a total duration of 82 hours. The oven was turned off and the pellets allowed to cool. The obtained PEF polymer #2 had a measured IV ~0.75 dL/g.

**Preparation of PEF/PET preforms 7, 8, 9 and 10**

PET was dried overnight under vacuum at 145°C prior to processing. PEF polymer #2 was dried overnight under vacuum at 155°C prior to processing. Dried pellets of PEF polymer #2 and PET were individually weighed out and combined in MYLAR® bags to create blends with 10 wt% PEF prior to injection molding with a specified preform mold. The sample bags were shaken by hand prior to molding to encourage homogeneous mixing of the pellets. For each state the corresponding MYLAR® bag was cut open and secured around the feed throat of an Arburg 420C injection molding machine (available from Arburg GmbH and Co.KG, Loβburg, Germany) to allow for gravimetric feeding. Injection molding of preforms was carried out with a valve-gated hot runner end cap and a 35 millimeter (mm) general purpose screw configuration. The injection molding conditions were optimized to produce acceptable preforms with minimum molded-in stresses and no visual defects per the specified barrel temperatures. An injection molding process with different extruder barrel temperature profiles and in some cases increased cycle times per preform was employed. Table 9 provides the injection molding conditions employed for each example 7, 8, 9, and 10.

**TABLE 9**

| | | Preform 7 | Preform 8 | Preform 9 | Preform 10 |
|---|---|---|---|---|---|
| **Process Description** | Polymer Composition | 10% PEF in PEF/PET | | | |
| | Target preform wt (g) | 25.5 | 25.5 | 18.8 | 18.8 |
| | Mold Temp (°C) | 12.8 | 12.8 | 12.8 | 12.8 |
| | Dryer Temp (°C) | 121 | 121 | 121 | 121 |
| **Barrel Temperature** | Feed (°C) | 280 | 289 | 279 | 290 |
| | Zone 2 (°C) | 281 | 290 | 280 | 291 |
| | Zone 3 (°C) | 280 | 290 | 280 | 290 |
| | Zone 4 (°C) | 280 | 290 | 280 | 290 |
| | Nozzle (°C) | 280 | 290 | 280 | 290 |
| **Injection** | Max Inj. Press. 1 (bar) | 1500 | 1500 | 1500 | 1500 |
| | 1st Injection Speed (ccm/sec) | 6.0 | 6.0 | 12.0 | 12.0 |
| | 2nd Injection Speed (ccm/sec) | 4.0 | 4.0 | 10.0 | 10.0 |
| **Holding Pressure** | Switch-Over Point (ccm) | 6.0 | 6.0 | 5.7 | 5.7 |
| | 1st Hold Pressure (bar) | 350 | 400 | 350.0 | 350.0 |
| | 2nd Hold Pressure (bar) | 350 | 400 | 350.0 | 350.0 |
| | 1st Hold Pr. Time (sec) | 0.0 | 0.0 | 0.0 | 0.0 |
| | 2nd Hold Pr. Time (sec) | 29.0 | 31.0 | 14.0 | 14.0 |
| | Plastic Pressure at switch-over (bar) | n/a | 450 | n/a | 470 |

(continued)

| | | Preform 7 | Preform 8 | Preform 9 | Preform 10 |
|---|---|---|---|---|---|
| **Process Description** | Polymer Composition | 10% PEF in PEF/PET | | | |
| **Dosage** | Circumf. Speed (m/min) | 8.0 | 8.0 | 5.0 | 5.0 |
| | Back Pressure (bar) | 25.0 | 25.0 | 25.0 | 25.0 |
| | Dosage Volume (ccm) | 27.0 | 27.0 | 20.0 | 20.0 |
| | Cushion (ccm) | 3.1 | 2.7 | 2.8 | 2.8 |
| | Meas. Dosage Time (sec) | 4.7 | 4.7 | 5.5 | 5.5 |
| **Process & Preform Data** | Fill Time (sec) | 6.1 | 6.1 | 1.8 | 1.8 |
| | Cooling Time (sec) | 12.0 | 12.0 | 8.0 | 18.0 |
| | Cycle Time (sec) | 52.4 | 54.4 | 28.5 | 38.2 |
| | Actual preform wt (g) | 26.7 | 26.8 | 18.9 | 19.0 |

**Degree of Transesterification**

The preforms were analyzed using IPC to determine the degree of transesterification for each sample. IPC results for preform 7 show that 14.1% of the preform is PEF homopolymer, leading to a degree of transesterification of 85.9%. IPC results for preform 8 show that very little of the preform is PEF homopolymer, leading to a degree of transesterification of about 99.9%. IPC results for preform 9 show that 29.3% of the preform is PEF homopolymer, leading to a degree of transesterification of 70.7%. IPC results for preform 10 show that 2.9% of the preform is PEF homopolymer, leading to a degree of transesterification of 97.1%.

**Preparation of PEF/PET bottles 7, 8, 9 and 10**

Preforms 7-10 were used to blow bottles were allowed to equilibrate at ambient temperature and relative humidity for a minimum of 12 hours prior to bottle blowing. The molded preforms were stretch blow molded into 500 milliliter (ml) straight wall bottles under the conditions listed in Table 10, so finalized to allow for optimum weight distribution and consistent sidewall thickness of the obtained bottle for each state. All bottles were blown on a Sidel SBO1/2 lab reheat stretch blow molding machine. The chosen preform design and bottle design determine that the PEF/PET blend experiences directional elongation during bottle blowing described by the stretch ratios and other dimensions as found in Table 13. Due to the high natural stretch ratio of PEF, bottle blowing conditions would be expected to deviate significantly from those normally associated with PET. However, it is believed that the use of relatively low levels of the PEF in PET (e.g. up to 20-25 wt%) the process conditions associated both with preform molding and bottle blowing fall within the ranges common for production of PET bottles, as shown in Tables 10 and 13. Bottles with wall thickness and weight distribution comparable to the standard PET bottle were achieved for 10 wt% PEF blends with PET while preserving the ability to employ preform design, bottle design, injection molding conditions, and bottle blowing conditions common for PET.

**TABLE 10**

| Bottle | 7 | 8 | 9 | 10 |
|---|---|---|---|---|
| **Sample** | **Preform 7** | **Preform 8** | **Preform 9** | **Prefor m 10** |
| Speed (bph) | 900 | 800 | 1000 | 1000 |
| **Oven Lamp Settings** | | | | |
| Overall power (%) | 84 | 93 | 69 | 74 |
| Zone 6 | 72 | 40 | 55 | 80 |
| Zone 5 | 65 | 70 | 85 | 75 |
| Zone 4 | 40 | 45 | 95 | 90 |
| Zone 3 | 40 | 35 | 10 | 10 |

(continued)

| Oven Lamp Settings | | | | |
|---|---|---|---|---|
| Zone 2 | 27 | 18 | 0 | 0 |
| Zone 1 | 40 | 35 | 80 | 70 |
| Preform Temp. (°C) | 102 | 103 | 97 | 93 |
| **Blow Timing/ Pressures** | | | | |
| Stretch Rod Speed (m/s) | 0.90 | 0.90 | 1.10 | 1.10 |
| Low Blow Position (mm) | 170 | 170 | 140 | 140 |
| Low Pressure (bar) | 10.0 | 10.0 | 10.0 | 10.0 |
| Low Blow Flow (bar) | 3 | 3 | 3 | 3 |
| High Blow Position (mm) | 285 | 285 | 285 | 285 |
| High Blow Pressure (bar) | 40.0 | 40.0 | 40.0 | 40.0 |
| Body Mold Temp (°C) | 7.2 | 7.2 | 7.2 | 7.2 |
| Base Mold Temp. (°C) | 7.2 | 7.2 | 7.2 | 7.2 |
| **Section Weights** | | | | |
| Top Weight (g) | 8.4 | 8.5 | 6.8 | 6.7 |
| Panel Weight (g) | 5.4 | 5.4 | 3.6 | 3.5 |
| 2nd Panel Weight (g) | 6.1 | 6.3 | 4.5 | 4.5 |
| Base Weight (g) | 6.6 | 6.5 | 4.1 | 4.2 |

**Comparative Examples: Preparation of 100% PET Preforms and Bottles**

Pellets of PET were individually weighed out in MYLAR® bags to provide samples of 100 wt% PET in the complete absence of PEF. These samples were employed to produce injection mold preforms where the conditions were as specified in Table 11. The corresponding preforms were stretch blow molded into 500 mL bottles under the conditions listed in Table 12, in order to allow for optimum weight distribution and consistent sidewall thickness of the obtained bottle for each state. The preform and bottle mold designs were the same as those using PEF polymer #2, producing PET bottles with equivalent stretch ratios to the PEF/PET bottles 7, 8, 9 and 10 described above ass shown by the bottle dimensions in Table 13. The bottle blowing conditions corresponded to those normally associated with PET. Comparative H is considered a "standard weight" PET bottle.

**TABLE 11**

| | | Preform D | Preform E | Preform F | Preform G | Preform H |
|---|---|---|---|---|---|---|
| **Process Description** | | | | | | |
| | Target preform wt (g) | 25.5 | 25.5 | 18.8 | 18.8 | 25.5 |
| | Mold Temp (°C) | 12.8 | 12.8 | 12.8 | 12.8 | 12.8 |
| | Dryer Temp (°C) | 121 | 121 | 121 | 121 | 121 |
| **Barrel Temperature** | Feed (°C) | 280 | 290 | 279 | 290 | 270 |
| | Zone 2 (°C) | 280 | 290 | 280 | 291 | 275 |
| | Zone 3 (°C) | 280 | 290 | 280 | 290 | 275 |
| | Zone 4 (°C) | 280 | 290 | 280 | 290 | 275 |
| | Nozzle (°C) | 279 | 290 | 280 | 290 | 275 |

(continued)

| | | Preform D | Preform E | Preform F | Preform G | Preform H |
|---|---|---|---|---|---|---|
| **Process Description** | | | | | | |
| **Injection** | Max Inj. Press. 1 (bar) | 1500 | 1500 | 1500 | 1500 | 1500 |
| | 1st Injection Speed (ccm/sec) | 6.0 | 6.0 | 12.0 | 12.0 | 12.0 |
| | 2nd Injection Speed (ccm/sec) | 4.0 | 4.0 | 10.0 | 10.0 | 10.0 |
| **Holding Pressure** | Switch-Over Point (ccm) | 6.0 | 6.0 | 5.7 | 5.7 | 5.0 |
| | 1st Hold Pressure (bar) | 350.0 | 350.0 | 350.0 | 350.0 | 250.0 |
| | 2nd Hold Pressure (bar) | 350.0 | 350.0 | 350.0 | 350.0 | 250.0 |
| | 1st Hold Pr. Time (sec) | 0.0 | 0.0 | 0.0 | 0.0 | 0.0 |
| | 2nd Hold Pr. Time (sec) | 29.0 | 29.0 | 14.0 | 14.0 | 13.0 |
| | Plastic Pressure at switch-over (bar) | n/a | n/a | 590 | n/a | 490 |
| **Dosage** | Circumf. Speed (m/min) | 8.0 | 8.0 | 5.0 | 5.0 | 4.0 |
| | Back Pressure (bar) | 25.0 | 25.0 | 25.0 | 25.0 | 25.0 |
| | Dosage Volume (ccm) | 27.0 | 27.0 | 20.0 | 20.0 | 25.0 |
| | Cushion (ccm) | 2.6 | 2.6 | 3.2 | 2.6 | 1.9 |
| | Meas. Dosage Time (sec) | 7.6 | 4.9 | 5.3 | 5.7 | 9.7 |
| **Process & Preform Data** | Fill Time (sec) | 6.1 | 6.1 | 1.8 | 1.8 | 2.4 |
| | Cooling Time (sec) | 12.0 | 12.0 | 8.0 | 16.5 | 21.0 |
| | Cycle Time (sec) | 52.4 | 52.4 | 28.5 | 36.9 | 40.3 |
| | Actual preform wt (g) | 26.6 | 26.6 | 18.9 | 18.9 | 25.3 |

**Preparation of Comparative PET Bottles D, E, F, G and H**

**TABLE 32**

| Comparative Bottle | D | E | F | G | H |
|---|---|---|---|---|---|
| Speed (bph) | 900 | 800 | 1000 | 1000 | 900 |
| **Oven Lamp Settings** | | | | | |
| Overall power (%) | 76 | 70 | 70 | 70 | 65 |
| Zone 6 | 60 | 55 | 75 | 75 | 50 |
| Zone 5 | 65 | 60 | 70 | 70 | 50 |
| Zone 4 | 40 | 40 | 100 | 100 | 50 |
| Zone 3 | 50 | 47 | 30 | 30 | 50 |
| Zone 2 | 40 | 37 | 0 | 0 | 50 |
| Zone 1 | 40 | 40 | 80 | 80 | 50 |
| Preform Temp. (°C) | 106 | 103 | 101 | 102 | 98 |

(continued)

| Blow Timing/ Pressures | | | | | |
|---|---|---|---|---|---|
| Stretch Rod Speed (m/s) | 0.90 | 0.90 | 1.10 | 1.10 | 0.90 |
| Low Blow Position (mm) | 170 | 170 | 180 | 170 | 175 |
| Low Pressure (bar) | 10.0 | 10.0 | 10.0 | 10.0 | 10.0 |
| Low Blow Flow (bar) | 3 | 3 | 3 | 3 | 3 |
| High Blow Position (mm) | 285 | 285 | 285 | 285 | 285 |
| High Blow Pressure (bar) | 40.0 | 40.0 | 40.0 | 40.0 | 40.0 |
| Body Mold Temp (°C) | 7.2 | 7.2 | 7.2 | 7.2 | 7.2 |
| Base Mold Temp. (°C) | 7.2 | 7.2 | 7.2 | 7.2 | 7.2 |
| **Section Weights** | | | | | |
| Top Weight (g) | 8.6 | 8.6 | 6.8 | 6.7 | 8.9 |
| Panel Weight (g) | 5.9 | 5.9 | 3.6 | 3.6 | 5.5 |
| 2nd Panel Weight (g) | 6.8 | 6.5 | 4.5 | 4.4 | 6.2 |
| Base Weight (g) | 5.3 | 5.5 | 3.8 | 4.0 | 4.8 |

**TABLE 13**

| Bottles | 7 and 8 and Comparative D and E | 9 and 10 and Comparative F and G | Comparative H |
|---|---|---|---|
| Preform No. | PRE-1532 | CT-11045-1 | CT-6239-1 |
| Finish Type | 1810 | 1881 | 1810 |
| Target Preform weight (g) | 25.5 | 18.8 | 25.5 |
| Preform wall thickness (mm) | 5.5 | 3.7 | 4.75 |
| Preform inner diameter (mm) | 9.94 | 9.94 | 12.1 |
| Preform working length (mm) | 68.21 | 72.22 | 66.09 |
| Bottle No. | CT-4858 | CT-4858 | CT-4858 |
| Bottle volume (mL) | 500 | 500 | 500 |
| Bottle diameter (mm) | 66.42 | 66.42 | 66.42 |
| Bottle working height (mm) | 177.49 | 177.49 | 177.49 |
| Hoop stretch ratio | 2.60 | 2.46 | 2.69 |
| Axial stretch ratio | 6.68 | 6.68 | 5.49 |
| Areal stretch ratio | 17.39 | 16.42 | 14.74 |

The PEF/PET and comparative PET bottles were tested for the ability to provide barrier to oxygen permeation. A minimum of 3 bottles for each state was characterized for oxygen transmission rate. The bottle barrier data is provided in Table 14.

**TABLE 14**

| Example | bottle weight (g) | Areal stretch ratio | Minimum extruder temp. (°C) | Maximum extruder temp. (°C) | *Melt residence time (s) | $P_x$, avg. oxygen permeability (cc/ package. day.atm) | % improvement oxygen permeability* | % improvement oxygen permeability† |
|---|---|---|---|---|---|---|---|---|
| D | 26.5 | 17.4 | 279 | 280 | 274 | 0.1796 | n/a | -6.02 |
| E | 26.5 | 17.4 | 290 | 290 | 274 | 0.1661 | n/a | 1.95 |
| 7 | 26.5 | 17.4 | 279 | 280 | 273 | 0.1311 | 27.02 | 22.62 |
| 8 | 26.5 | 17.4 | 290 | 291 | 285 | 0.1469 | 11.54 | 13.27 |
| F | 18.8 | 16.4 | 279 | 280 | 201 | 0.2626 | n/a | -55.02 |
| G | 18.8 | 16.4 | 290 | 291 | 261 | 0.2513 | n/a | -48.34 |
| 9 | 18.8 | 16.4 | 280 | 281 | 201 | 0.1991 | 24.18 | -17.53 |
| 20 | 18.8 | 16.4 | 289 | 290 | 270 | 0.2114 | 15.88 | -24.78 |
| H | 25.4 | 14.7 | 270 | 275 | 229 | 0.1694 | n/a | n/a |

* The percent improvement of the oxygen permeability is based on a PET bottle from the same preform design and weight.
† The percent improvement of the oxygen permeability is based on the improvement over Comparative Example H, which is considered to be a standard size PET bottle.

The melt residence time is estimated per preform and composition based on the necessary dosage volume, cushion, screw volume and total cycle time to produce one preform. The results in Table 14 demonstrate that when PEF/PET bottles are compared to identical PET bottles of the same the same weight, there is provided a percent improvement in the oxygen permeability of 11 to 27%. Based on the magnitude of the change versus the reference comparative bottle H, it can be seen that decreasing the weight of PEF/PET bottles by 5 to 35% over the identical PET bottles would allow for oxygen permeation rates that are less than or equal to the PET bottles.

## Claims

**1.** A method of making a bottle comprising the steps of:

a) making a poly(ethylene furandicarboxylate)/poly(ethylene terephthalate) (PEF/PET) blend, wherein the amount of PEF ranges from 0.1% to 40% by weight based on the total weight of the blend;
b) injection molding the PEF/PET blend of step a) to form a blend preform under substantially similar processing conditions as used to make a standard PET preform;
c) stretch blow molding the blend preform of step b) in a standard PET mold to form a blend bottle under substantially similar processing conditions as used to make a standard PET bottle from the standard PET preform,

wherein the blend bottle made in step c) has improved shelf life as compared to the shelf life of a standard PET bottle.

**2.** The method of claim 1, wherein the amount of PEF ranges from 10% to 40% by weight based on the total weight of the blend.

**3.** The method of claim 1 or 2, wherein:

said substantially similar processing conditions in step b) involve injection molding through a barrel having one or more temperature zones at a temperature in the range of 230° to 325°C; and
said substantially similar processing conditions in step c) involve heating the preform to a temperature in the range of 75-125°C prior to stretch blow molding

**4.** The method of claim 1, wherein each section (top, panel and base) of the blend bottle has less than 25% variation in target weight compared to corresponding sections of a standard PET bottle.

**5.** The method of claim 1, wherein poly(ethylene furandicarboxylate) is an unmodified poly(ethylene furandicarboxylate) derived from ethylene glycol and furan dicarboxylate or a derivative thereof.

**6.** The method of claim 1 wherein the step b) of injection molding the PEF/PET blend of step a) to form a blend preform comprises processing the PEF/PET blend through a barrel having one or more temperature zones at a temperature in the range of 260 °C to 300 °C.

**7.** The method of claim 1 wherein the PEF/PET blend bottle has an areal stretch ratio in the range of 2-30.

**8.** The method of claim 1 wherein the step c) of stretch blow molding the blend preform of step b) in a standard PET mold comprises using a standard PET mold for a bottle having a volume in the range of 59 milliliter to 2 liter.

**9.** The method of claim 5, wherein the blend bottle made is selected from the group consisting of a 236,588 mL (8 oz) bottle, 295, 735 mL (10oz) bottle, a 354,882 mL(12 oz) bottle, 473,176 mL (16 oz) I bottle, a 500 mL bottle, a 750 mL bottle, a 1 L bottle and a 2 L bottle.

**10.** The method of claim 1, wherein steps b) and c) are performed in an integrated injection-stretch blow molding machine or separately in an injection molding machine and in a stretch-blow molding machine.

**11.** A method of claim 1, wherein the PEF/PET bottle has an oxygen permeation rate, a carbon dioxide permeation rate and/or a water vapor permeation rate that is less than or equal to an identically shaped bottle consisting of polyethylene terephthalate polymer and weighing 1.05 to 1.54 times the weight of the PEF/PET bottle.

**12.** A method of improving shelf life of a carbonated beverage stored in a bottle comprising packaging the carbonated

beverage in a bottle made from a PEF/PET blend, wherein the amount of PEF is in the range of 0.1-40% by weight, based on the total weight of the blend.

## Patentansprüche

**1.** Verfahren zum Herstellen einer Flasche, umfassend die Schritte des:

a) Herstellens einer Poly(ethylenfurandicarboxylat)/ Poly(ethylenterephthalat)-(PEF/PET)-Mischung, wobei die Menge von PEF im Bereich von 0,1 bis 40 Gew.-%, auf das Gesamtgewicht der Mischung bezogen, liegt;
b) Spritzgießens der PEF/PET-Mischung aus Schritt a), um eine Mischungsvorform unter im wesentlichen ähnlichen Verarbeitungsbedingungen herzustellen, wie sie zum Herstellen einer Standard-PET-Vorform angewendet werden;
c) Streckblasens der Mischungsvorform aus Schritt b) in einer Standard-PET-Form, um eine Mischungsflasche unter im wesentlichen denselben Verarbeitungsbedingungen zu bilden, wie sie zum Herstellen einer Standard-PET-Flasche aus der Standard-PET-Vorform verwendet werden,

wobei die in Schritt c) hergestellte Mischungsflasche eine verbesserte Lagerbeständigkeit im Vergleich mit der Lagerbeständigkeit einer Standard-PET-Flasche aufweist.

**2.** Verfahren nach Anspruch 1, wobei die Menge von PEF im Bereich von 10 bis 40 Gew.-%, auf das Gesamtgewicht der Mischung bezogen, liegt.

**3.** Verfahren nach Anspruch 1 oder 2, wobei:

die im Wesentlichen ähnlichen Verarbeitungsbedingungen in Schritt b) Spritzgießen durch einen Zylinder involvierten, der eine oder mehrere Temperaturzonen bei einer Temperatur im Bereich von 230 ° bis 325 °C aufweist; und
die im Wesentlichen ähnlichen Verarbeitungsbedingungen in Schritt c) das Erhitzen der Vorform auf eine Temperatur im Bereich von 75-125 °C vor dem Streckblasen involvieren.

**4.** Verfahren nach Anspruch 1, wobei jeder Abschnitt (Kopf, Mittelteil und Boden) der Mischungsflasche weniger als 25 % Variation im Zielgewicht im Vergleich mit entsprechenden Abschnitten einer Standard-PET-Flasche aufweist.

**5.** Verfahren nach Anspruch 1, wobei das Poly(ethylenfurandicarboxylat) ein unmodifiziertes Poly(ethylenfurandicarboxylat) ist, das von Ethylenglykol und Furandicarboxylat oder einem Derivat davon abgeleitet ist.

**6.** Verfahren nach Anspruch 1, wobei der Schritt b) des Spritzgießen der PEF/PET-Mischung aus Schritt a) zum Bilden einer Mischungsvorform das Verarbeiten der PEF/PET-Mischung durch einen Zylinder umfasst, der eine oder mehrere Temperaturzonen bei einer Temperatur im Bereich von 260 °C bis 300 °C aufweist.

**7.** Verfahren nach Anspruch 1, wobei die PEF/PET-Mischungsflasche ein Flächenstreckverhältnis im Bereich von 2-30 aufweist.

**8.** Verfahren nach Anspruch 1, wobei der Schritt c) des Streckblasens der Mischungsvorform aus Schritt b) in einer Standard-PET-Form das Verwenden einer Standard-PET-Form für eine Flasche umfasst, die ein Volumen im Bereich von 59 Millilitern bis 2 Litern aufweist.

**9.** Verfahren nach Anspruch 5, wobei die hergestellte Mischungsflasche aus der Gruppe ausgewählt ist bestehend aus einer Flasche von 236,588 ml (8 Unzen), einer Flasche von 295,735 ml (10 Unzen), einer Flasche von 354,882 ml (12 Unzen), einer Flasche von 473,176 ml (16 Unzen), einer Flasche von 500 ml, einer Flasche von 750 ml, einer Flasche von 11 und einer Flasche von 2 1.

**10.** Verfahren nach Anspruch 1, wobei die Schritte b) und c) in einer integrierten Spritzstreckblasmaschine oder getrennt in einer Spritzgießmaschine und einer Streckblasmaschine ausgeführt werden.

**11.** Verfahren nach Anspruch 1, wobei die PEF/PET-Flasche eine Sauerstoffdurchlässigkeitsrate, eine Kohlendioxiddurchlässigkeitsrate und/oder eine Wasserdampfdurchlässigkeitsrate aufweist, die geringer als oder gleich einer

identisch gestalteten Flasche ist, die aus Polyethylenterephthalatpolymer besteht und das 1,05- bis 1,54-fache des Gewichts der PEF/PET-Flasche wiegt.

**12.** Verfahren zum Verbessern der Lagerbeständigkeit eines kohlensäurehaltigen Getränks, das in einer Flasche aufbewahrt wird, umfassend das Verpacken des kohlensäurehaltigen Getränks in einer Flasche, die aus PEF/PET-Mischung hergestellt ist, wobei die Menge von PEF im Bereich von 0,1-40 Gew.-%, auf das Gesamtgewicht der Mischung bezogen, liegt.

## Revendications

**1.** Procédé de fabrication d'une bouteille comprenant les étapes de :

a) préparation d'un mélange de poly(éthylène furandicarboxylate)/poly(éthylène téréphtalate) (PEF/PET), dans lequel la quantité de PEF est de 0,1 à 40 % en poids rapporté au poids total du mélange,
b) moulage par injection du mélange PEF/PET de l'étape a) pour former une préforme de mélange dans des conditions de transformation essentiellement similaires à celles utilisées pour fabriquer une préforme standard en PET,
c) moulage par étirement-soufflage de la préforme de l'étape b) dans un moule standard pour PET pour former une bouteille en mélange dans des conditions de transformation essentiellement similaires à celles utilisées pour fabriquer une bouteille standard en PET à partir de la préforme standard en PET,

dans lequel la bouteille en mélange fabriquée à l'étape c) a une durée de conservation améliorée comparé à la durée de conservation d'une bouteille standard en PET.

**2.** Procédé selon la revendication 1, dans lequel la quantité de PEF est de 10 % à 40 % en poids rapporté au poids total du mélange.

**3.** Procédé selon la revendication 1 ou 2, dans lequel :

lesdites conditions de transformation essentiellement similaires dans l'étape b) impliquent un moulage par injection à travers un cylindre présentant une ou plusieurs zones de température à une température de 230 °C à 325 °C, et
lesdites conditions de transformation essentiellement similaires dans l'étape c) impliquent un chauffage de la préforme à un température de 75 à 125 °C avant le moulage par étirage soufflage.

**4.** Procédé selon la revendication 1, dans lequel chaque section (haut, corps, fond) de la bouteille en mélange a moins de 25 % de variation en poids cible comparée à des sections correspondantes d'une bouteille standard en PET.

**5.** Procédé selon la revendication 1, dans lequel le poly(éthylène furandicarboxylate) est un poly(éthylène furandicarboxylate) non modifié obtenu à partir d'éthylène glycol et de furane dicarboxylate ou d'un dérivé de celui-ci.

**6.** Procédé selon la revendication 1, dans lequel l'étape b) de moulage par injection du mélange PEF/PET de l'étape a) pour former une préforme en mélange comprend la transformation du mélange PEF/PET à travers un cylindre présentant une ou plusieurs zones de température à une température de 260 °C à 300 °C.

**7.** Procédé selon la revendication 1, dans lequel la bouteille en mélange PEF/PET a un rapport d'étirage de surface de 2 à 30.

**8.** Procédé selon la revendication 1, dans lequel l'étape c) de moulage par étirage-soufflage de la préforme en mélange de l'étape b) dans un moule standard pour PET comprend l'utilisation d'un moule standard pour PET pour une bouteille ayant un volume de 59 millilitres à 2 litres.

**9.** Procédé selon la revendication 5, dans lequel la bouteille en mélange fabriquée est sélectionnée dans le groupe constitué par une bouteille de 236,588 ml (8 oz), une bouteille de 295,735 ml (10 oz), une bouteille de 354,882 ml (12 oz), une bouteille de 473,176 ml (16 oz), une bouteille de 500 ml, une bouteille de 750 ml, une bouteille de 1 L et une bouteille de 2 L.

**10.** Procédé selon la revendication 1, dans lequel les étapes b) et c) sont exécutées dans une machine de moulage à injection intégrée avec soufflage-étirage ou séparément dans une machine de moulage par injection et une machine de moulage par étirage-soufflage.

**11.** Procédé selon la revendication 1, dans lequel la bouteille en PEF/PET a un taux de perméabilité à l'oxygène, un taux de perméabilité au dioxyde de carbone et/ou un taux de perméabilité à la vapeur d'eau qui est inférieur ou égal à celui d'une bouteille de forme identique constituée de polymère de polyéthylène téréphtalate et pesant 1,05 à 1,54 fois le poids de la bouteille en PEF/PET.

**12.** Procédé pour améliorer une durée de conservation d'une boisson gazeuse conservée dans une bouteille comprenant le conditionnement de la boisson gazeuse dans une bouteille faite d'un mélange PEF/PET, dans lequel la quantité de PEF est de 0,1 à 40 % en poids, rapporté au poids total du mélange.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20150110983 A, Kriegel
- US 20150064383 A, Kriegel
- EP 2763908 A, Collias
- US 5473161 A


### Non-patent literature cited in the description


- **Y. BRUN ; P. FOSTER.** Characterization of synthetic copolymers by interaction polymer chromatography: separation by microstructure. *J. Sep. Sci.,* 2010, vol. 33, 3501-351